# EUROPEAN PATENT APPLICATION

(11) **EP 4 187 421 A1**
(43) Date of publication of application: **31.05.2023**
(21) Application number: 21855430.1
(22) Date of filing: 04.08.2021
(51) Int. Cl.: G06F 21/60, G06F 13/42, G06F 21/85, G06N 3/04, G06N 3/08

(54) **MEDIA INFORMATION TRANSMISSION METHOD AND ELECTRONIC DEVICE**

(30) Priority: 14.08.2020 CN 202010819860; 19.11.2020 CN 202011300677
(71) Applicant: Huawei Technologies Co., Ltd., Shenzhen, Guangdong 518129 (CN)
(72) Inventor: TI, Chunli, Shenzhen, Guangdong 518129 (CN); HE, Xiaoxiang, Shenzhen, Guangdong 518129 (CN); WEI, Jiayi, Shenzhen, Guangdong 518129 (CN)
(74) Representative: Isarpatent
(86) International application number: PCT/CN2021/110644
(87) International publication number: WO 2022/033377

(57) **Abstract**

This application provides a media information transmission method and an apparatus. When the method is applied to a first device, the first device includes a first transmission interface, and the method includes: collecting first media information; performing feature extraction on the first media information, to determine first feature data corresponding to the first media information; and sending the first feature data to a second device through the first transmission interface, where the first feature data is used by the second device to obtain a result of a first application. This can reduce transmission overheads and encoding/decoding overheads during media information transmission, and improve a transmission effect.

## Description

### CROSS-REFERENCE TO RELATED APPLICATIONS

This application claims priority to Chinese Patent Application No. 202010819860.3, filed with the China National Intellectual Property Administration on August 14, 2020 and entitled "DISTRIBUTED AI-ORIENTED TRANSMISSION INTERFACE SYSTEM", which is incorporated herein by reference in its entirety; and this application claims priority to Chinese Patent Application No. 202011300677.9, filed with the China National Intellectual Property Administration on November 19, 2020 and entitled "MEDIA INFORMATION TRANSMISSION METHOD AND APPARATUS", which is incorporated herein by reference in its entirety.

### TECHNICAL FIELD

Embodiments of this application relate to the field of media technologies, and in particular, to a media information transmission method and an electronic device.

### BACKGROUND

In machine algorithm application scenarios such as machine vision, voice interaction, facial recognition, autonomous driving, and environment modeling, an image collection device collects an original video or image resource, compresses the video or image resource into a video stream, and transmits the video stream to a corresponding server or a device that implements machine algorithm application. The device decodes or decompresses the received video stream to recover a standard audio and video signal, and then processes the audio and video signal by using a machine algorithm such as deep learning, to obtain a processing result of an artificial intelligence (artificial intelligence, AI) application.

In the foregoing process, a large amount of bandwidth needs to be occupied, and a large quantity of decoding or decompression processes are required for the device for machine algorithm application, which results in a waste of computing resources and a waste of transmission bandwidth resources.

### SUMMARY

This application provides a media information transmission method and an electronic device, to resolve a problem in the conventional technology that a large bandwidth resource is occupied during media data transmission, which is unfavorable to subsequent application of a media resource, and the like.

According to a first aspect, this application provides a media information transmission method, applied to a first device. The first device includes a first transmission interface, and the method includes: collecting first media information; performing feature extraction on the first media information, to determine first feature data corresponding to the first media information; and sending the first feature data to a second device through the first transmission interface, where the first feature data is used by the second device to obtain a result of a first application.

The first application may be an AI application, and a device that performs the foregoing method may be the first device, or may be a module or component, for example, a chip, with a corresponding function. The following uses an example in which the first device performs the method. The first device may be a device that has a media information collection capability and a feature extraction capability. The first device may include a first transmission interface, and the first transmission interface supports transmission of feature data, so that media information is transmitted to a second device in a manner of feature data, which avoids a complex encoding and decoding process in the conventional technology because media information needs to be compressed and encoded at a transmit end and the transmitted media information needs to be recovered at a receive end of the media information. This reduces computing resource overheads, reduces an overall system delay, helps to be applied to the AI application requiring high real-time performance, and improves user experience of using the AI application. In addition, because the abstract feature data is transmitted, an encoding difficulty is reduced, an amount of transmitted information is greatly reduced, and transmission resource overheads are reduced. Further, in consideration of security during media information transmission, the abstracted feature data is transmitted, and compared with the media information transmission manner in the conventional technology, the feature data transmitted in the transmission interface cannot be reversely converted into the original media information, which has a better privacy protection capability.

In a possible implementation, before the sending the first feature data to a second device, the method further include:
receiving, through the first transmission interface, a capability negotiation request message sent by the second device, where the capability negotiation request message is used to request a transmission protocol supported by the first device and a feature extraction capability of the first device, the transmission protocol corresponding to the first device is used to indicate that the first device supports transmission of feature data, and the feature extraction capability of the first device is used to indicate that the first device supports extraction of the first feature data corresponding to the first media information; and sending a capability negotiation response message to the second device through the first transmission interface, where the capability negotiation response message is used to confirm the transmission protocol supported by the first device for transmission of the feature data and the feature extraction capability of the first device.

In a possible implementation, the method further includes: sending a first notification message to the second device in response to a first operation on the first application, where the first device is an electronic device that establishes a communication connection with the second device, and the first notification message is used to request the first device to establish first application collaboration with the second device; and receiving a first response message returned by the second device, where the first response message is used to confirm that the first device and the second device enable the first application collaboration.

According to the foregoing method, a process of establishing the first application collaboration between the first device and the second device can be triggered based on the first operation on the first application on the first device, and whether the first application collaboration is enabled is determined by the second device. The first application collaboration may be a collaboration process in which the first device sends the first feature data to the second device through the first transmission interface, and the second device obtains the result of the first application based on the first feature data. This improves user experience of using the first device and the second device to process the first application collaboratively.

In a possible implementation, the method includes: receiving a first notification message sent by the second device, where the first device is an electronic device that establishes a communication connection with the second device, and the first notification message is used to request the first device to establish first application collaboration with the second device; and sending a first response message to the second device in response to a third operation on the first application, where the first response message is used to confirm that the first device and the second device enable the first application collaboration.

According to the foregoing method, the second device triggers the process of establishing the first application collaboration between the first device and the second device, and the first device confirms, based on the third operation on the first application on the first device, whether to enable the first application collaboration. This improves user experience of collaboratively processing the first application by the first device and the second device.

In a possible implementation, before the sending the first feature data to a second device, the method further include:
sending, through the first transmission interface, a capability negotiation request message to the second device, where the capability negotiation request message is used to request a transmission protocol supported by the second device and a feature data processing capability of the second device, the transmission protocol corresponding to the second device is used to indicate that the second device supports transmission of feature data, and the feature data processing capability of the second device is used to indicate a capability that the second device supports processing of the first feature data to obtain the result of the first application; and receiving a capability negotiation response message from the second device through the first transmission interface, where the capability negotiation response message is used to confirm the transmission protocol supported by the second device for transmission of the feature data and the feature data processing capability of the second device.

According to the foregoing method, whether the first device has a feature extraction capability and a feature data transmission capability and whether the second device supports the feature data receiving capability and the feature data receiving capability can be determined through capability negotiation, for example, the first device initiates a negotiation request message, or the second device initiates the negotiation request message, so that the first device and the second device confirm whether to support transmission of feature data and collaboratively implement a corresponding function of the first application, thereby improving performance of the AI application.

In a possible implementation, before the performing, by the first device, feature extraction on the first media information, the method further includes:
obtaining a first feature extraction model, where the first feature extraction model is used to perform feature extraction on the first media information, a version of the first feature extraction model corresponds to a version of a first feature data processing model, and the first feature data processing model is used by the second device to process the first feature data to obtain the result of the first application.

According to the foregoing method, after the first device and the second device establish a connection, and determine to collaboratively process a task of the first application, the first device and the second device separately load an input part (the first feature data extraction model) and an output part (the first feature data processing model) of an algorithm model corresponding to the first application. This implements the first application collaboration between the first device and the second device.

In a possible implementation, the capability negotiation response message further includes:
a version of a feature extraction model in the first device; or a version of a feature data processing model in the second device.

According to the foregoing method, whether the version of the feature extraction model in the first device and the version of the feature data processing model in the second device can complete the first application collaboration can be confirmed through a capability negotiation response.

In a possible implementation, the obtaining a first feature extraction model includes:
receiving the first feature extraction model from the second device through the first transmission interface, receiving the first feature extraction model from a server, or reading the first feature extraction model stored in the first device.

According to the foregoing method, the first feature extraction model can be obtained in a plurality of manners, and this implements more flexible AI application collaboration.

In a possible implementation, the method further includes:
sending the first feature data processing model to the second device through the first transmission interface, where
a version of the first feature extraction model corresponds to a version of the first feature data processing model, and the first feature data processing model is used by the second device to process the first feature data to obtain the result of the first application.

The first device can store the first feature data processing model. According to the foregoing method, the first feature data processing model is sent to the second device through the first transmission interface, so that the first device and the second device can process media information through AI application collaboration.

In a possible implementation, the method further includes:
obtaining a second feature extraction model, where a version of the second feature extraction model corresponds to a version of a second feature data processing model, and the second feature extraction model and the second feature data processing model are determined after the first feature extraction model and the second feature data processing model are updated.

According to the foregoing method, the feature extraction model (namely, the second feature extraction model) after the update can be obtained after the first feature extraction model is updated. This can meet requirements of various different AI applications, and improve applicability of collaboratively processing the media information by the first device and the second device through the AI application.

In a possible implementation, the method further includes:
performing feature extraction on a training sample by using the first feature extraction model, to generate first training feature data; and
sending the first training feature data to the second device through the first transmission interface, where the first training feature data is used to train the first feature extraction model and the first feature data processing model.

According to the foregoing method, the first device and the second device can be used to perform joint training, and computing power of the first device and the second device can be appropriately used, to improve performance of the AI application.

In a possible implementation, the method further includes: receiving feedback data from the second device through the first transmission interface, where the feedback data is determined by the second device after training based on the first training feature data, and the feedback data is used by the first device to train the first feature extraction model.

According to the foregoing method, the feature extraction model in the first device is trained based on the feedback data fed back by the second device. This improves performance of the feature extraction model via a training effect of joint training performed by the first device and the second device.

In a possible implementation, the method further includes:
receiving a first message from the second device through the first transmission interface, where the first message is used to indicate a status of collecting media information by the first device; and adjusting, in response to the first message, the status of collecting the media information by the first device.

According to the foregoing method, the first device can adjust, based on the first message sent by the second device, the status of collecting the media information by the first device, to better obtain the media information to be collected by the first application, and improve an effect of the first application.

In a possible implementation, the status of collecting the media information by the first device includes at least one of the following: an enabled state, a disabled state, or collecting a parameter of the media information.

In a possible implementation, the method further includes: receiving a second message from the second device through the first transmission interface, where the second message is used to indicate the first device to obtain first data; in response to the second message, obtaining the first data, or collecting the first data; and sending the first data to the second device, where the first data is one of the following: media information collected by the first device, a parameter of the first device, data stored in the first device, and data received by the first device.

According to the foregoing method, the second device can indicate the first device to obtain the first data, so that the first device and the second device can transmit other data while transmitting the feature data. This helps improve transmission performance and adaptability of a transmission scenario that are required by the first device and the second device to implement the function of the AI application.

In a possible implementation, the method further includes: sending the first data to the second device through the first transmission interface.

According to the foregoing method, the first transmission interface can support transmission of a plurality of types of data. This improves transmission performance and adaptability of the transmission scenario.

In a possible implementation, the method further includes: receiving a second message from the second device through the first transmission interface, where the second message is used to indicate the first device to collect feature data corresponding to third media information; collecting the third media information in response to the second message; performing feature extraction on the third media information, to obtain third feature data; and sending the third feature data to the second device through the first transmission interface.

According to the foregoing method, the second device can send the second message, to control the first device to collect the media information and transmit the corresponding third feature data. For example, the third media information to be collected can be determined based on the processing result of the first application or a requirement of the AI application. This flexibly adjusts the media information collected by the first device, so that the AI application can obtain a better result, and improves an overall effect of the AI application.

In a possible implementation, the second message or the first message is determined by the second device based on the first feature data.

According to the foregoing method, the second device can determine the result of the first application based on the first feature data transmitted by the first device, and generate the first message or the second message based on the result of the first application, so as to feed back the corresponding first message or second message to the first device. The first device can adjust, in response to the first message or the second message, collecting, obtaining, and transmitting the media information, so that the first device and the second device better complete the first application collaboration.

In a possible implementation, the first device may further include a display unit, and the method further includes: receiving a third message from the second device through the first transmission interface, where the third message is determined by the second device based on the first feature data, and the third message is used to indicate content to be displayed by the first device; and displaying, by using the display unit in response to the third message, the content indicated by the third message and to be displayed by the first device.

According to the foregoing method, the to-be-displayed content can be obtained based on the third message, where the content may be the processing result of the first application, or may be other content that the second device needs to display on the first device, so that the first device and the second device better implement the AI application collaboration, thereby improving use experience of the AI application.

In a possible implementation, the method further includes:
receiving, through the first transmission interface, an authentication request message sent by the second device, where the authentication request message is used to request the first device to determine whether to establish a communication connection with the second device, and the communication connection is used to confirm permission that the second device controls the first device; and
sending an authentication response message to the second device through the first transmission interface, where the authentication response message is used to confirm the permission that the second device controls the first device.

According to the foregoing method, whether the second device can obtain the permission to control the first device can be confirmed through authentication between the first device and the second device, so that after obtaining the result of the first application based on the first feature data, the second device adjusts the first device to collect the media information. This helps obtain the better result of the first application, and improves the performance of AI application.

In a possible implementation, the method further includes:
receiving, through the first transmission interface, an authentication success message sent by the second device, where the authentication success message includes a device identifier corresponding to the first device, and an identifier of a distributed system in which the first device and the second device are located.

According to the foregoing method, the first device and the second device can be disposed as devices in the distributed system, to better manage the first device and the second device. This helps implement the AI application collaboration by using a plurality of devices.

In a possible implementation, the first device includes a first module, and the authentication success message further includes at least one of the following: an identifier of the first module in the first device and an identifier of the first module in the distributed system.

According to the foregoing method, the module in the first device can be disposed as the module in the distributed system, to prepare the second device for controlling modules in the devices and collaboratively completing the AI application.

In a possible implementation, the first device establishes a channel connection with the second device through a third transmission interface, and feature data or a message sent by the first device is sent through the third transmission interface after being encapsulated into first bit stream data through the first transmission interface.

According to the foregoing method, the feature data is encapsulated through the first transmission interface, and the data obtained after encapsulation is sent to the second device through the third transmission interface. Through the third transmission interface, a plurality of transmission protocols can be compatible, and a function such as aggregation transmission can also be implemented. This improves a transmission capability of the first device and compatibility of transmitting media information.

In a possible implementation, the first device establishes the channel connection with the second device through the third transmission interface, and a message received by the first device is obtained after second bit stream data received through the third transmission interface is decapsulated through the first transmission interface.

According to the foregoing method, the data that is received from the second device through the third transmission interface is decapsulated through the first transmission interface. Through the third transmission interface, the plurality of transmission protocols can be compatible, and the function such as aggregation transmission can also be implemented. This improves the transmission capability of the first device and the compatibility of transmitting media information.

According to a second aspect, this application provides a media information transmission method, applied to a second device. The second device includes a second transmission interface, and the method includes: receiving first feature data from a first device through the second transmission interface, where the first feature data is determined after the first device performs feature extraction on collected first media information; and processing the first feature data, to obtain a processing result of a first application.

The first application may be an AI application, and a device that performs the foregoing method may be the second device, or may be a module or component, for example, a chip, with a corresponding function. The following uses an example in which the second device performs the method. The second device may be a device that has a feature data receiving capability and a feature data processing capability. The second device may include a second transmission interface, and the second transmission interface supports transmission of feature data, so that the second device receives feature data instead of directly receiving media data, which avoids a complex encoding and decoding process in the conventional technology because media information needs to be compressed and encoded at a transmit end and the transmitted media information needs to be recovered at a receive end of the media information. This reduces computing resource overheads, reduces an overall system delay, helps to be applied to the AI application requiring high real-time performance, and improves user experience of using the AI application. In addition, because the abstract feature data is transmitted, an encoding difficulty is reduced, an amount of transmitted information is greatly reduced, and transmission resource overheads are reduced. Further, in consideration of security during media information transmission, the abstracted feature data is transmitted, and compared with the media information transmission manner in the conventional technology, the feature data transmitted in the transmission interface cannot be reversely converted into the original media information, which has a better privacy protection capability.

In a possible implementation, the method further includes: sending a first notification message to the first device in response to a second operation on the first application, where the first device is an electronic device that establishes a communication connection with the second device, and the first notification message is used to request the first device to establish first application collaboration with the second device; and receiving a first response message returned by the second device, where the first response message is used to confirm that the first device and the second device enable the first application collaboration.

According to the foregoing method, the second device triggers, in response to the second operation on the first application, an establishment process of establishing the first application collaboration between the first device and the second device, and the first device confirms whether to enable the first application collaboration. This improves user experience of collaboratively processing the first application by the first device and the second device.

In a possible implementation, the method includes: receiving a first notification message sent by the first device, where the first device is an electronic device that establishes a communication connection with the second device, and the first notification message is used to request the first device to establish first application collaboration with the second device; and sending a first response message to the first device in response to a fourth operation on the first application, where the first response message is used to confirm that the first device and the second device enable the first application collaboration.

According to the foregoing method, the first device can trigger an establishment process of establishing the first application collaboration between the first device and the second device, and the second device confirms, in response to the fourth operation on the first application, whether to enable the first application collaboration. The first application collaboration may be a collaboration process in which the first device sends the first feature data to the second device through the first transmission interface, and the second device obtains the result of the first application based on the first feature data. This improves user experience of using the first device and the second device to process the first application collaboratively.

In a possible implementation, before the receiving first feature data from a first device, the method further includes:
sending, through the second transmission interface, a capability negotiation request message to the first device, where the capability negotiation request message is used to request a transmission protocol supported by the first device and a feature extraction capability of the first device, the transmission protocol corresponding to the first device is used to indicate that the first device supports transmission of feature data, and the feature extraction capability of the first device is used to indicate that the first device supports extraction of the first feature data corresponding to the first media information; and receiving, through the second transmission interface, a capability negotiation response message sent by the first device, where the capability negotiation response message is used to confirm the transmission protocol supported by the first device for transmission of the feature data.

In a possible implementation, before the receiving first feature data from a first device, the method further includes:
receiving, through the second transmission interface, a capability negotiation request message sent by the first device, where the capability negotiation request message is used to request a transmission protocol supported by the second transmission interface and a feature data processing capability of the second device, the transmission protocol corresponding to the second device is used to indicate that the second device supports transmission of feature data, and the feature data processing capability of the second device is used to indicate a capability that the second device supports processing of the first feature data to obtain the result of the first application; and sending a capability negotiation response message to the first device through the second transmission interface, where the capability negotiation response message is used to confirm the transmission protocol supported by the second device for transmission of the feature data and the feature data processing capability of the second device.

In a possible implementation, before the receiving first feature data, the method further includes:
obtaining a first feature data processing model, where the first feature data processing model is used by the second device to process the first feature data to obtain the result of the first application, a version of a first feature extraction model corresponds to a version of the first feature data processing model, and the first feature extraction model is used to perform feature extraction on the first media information.

According to the foregoing method, after the first device and the second device establish a connection, and determine to collaboratively process a task of the first application, the first device and the second device separately load an input part (the first feature data extraction model) and an output part (the first feature data processing model) of an algorithm model corresponding to the first application. This implements the first application collaboration between the first device and the second device.

In a possible implementation, the capability negotiation response message further includes: a version of a feature extraction model in the first device; or a version of a feature data processing model in the second device.

According to the foregoing method, whether the version of the feature extraction model in the first device and the version of the feature data processing model in the second device can complete the first application collaboration can be confirmed through a capability negotiation response.

In a possible implementation, the obtaining a first feature data processing model includes: receiving the first feature data processing model from the first device through the second transmission interface, receiving the first feature data processing model from a server, or reading the first feature data processing model stored in the second device.

In a possible implementation, the method further includes: sending a first feature extraction model to the first device through the second transmission interface, where a version of the first feature extraction model corresponds to a version of a first feature data processing model, and the first feature data processing model is used by the second device to process the first feature data to obtain the result of the first application. In a possible implementation, the method further includes: obtaining a second feature data processing model, where a version of the second feature data processing model corresponds to a version of a second feature extraction model, and the second feature extraction model and the second feature data processing model are determined after the first feature extraction model and the second feature data processing model are updated.

According to the foregoing method, in a plurality of manners, the first device can obtain the first feature extraction model, and the second device can obtain the first feature data processing model, and this implements more flexible AI application collaboration.

In a possible implementation, the method further includes: receiving first training feature data, where the first training feature data is determined after the first device performs feature extraction on a training sample by using the first feature extraction model; and training the first feature data processing model based on the first training feature data.

In a possible implementation, the method further includes: obtaining feedback data of the first feature extraction model, where the feedback data is determined by the second device after training based on the first training feature data, and the feedback data is used by the first device to train the first feature extraction model; and sending the feedback data to the first device.

In a possible implementation, the method further includes: receiving second feature data sent by the second device, where the second feature data is determined by the first device after the first device performs feature extraction on collected second media information by using the second feature extraction model; and processing the second feature data by using the second feature data processing model, to obtain the result of the first application.

According to the foregoing method, the first device and the second device can be used to perform joint training, and computing power of the first device and the second device can be appropriately used, to improve performance of the AI application.

In a possible implementation, the method further includes: sending a first message to the first device through the second transmission interface, where the first message is used to indicate a status of collecting media information by the first device.

According to the foregoing method, the second device can send the first message to the first device, to adjust the status of collecting the media information by the first device, to better obtain the media information to be collected by the first application, and improve an effect of the first application.

In a possible implementation, the status of collecting the media information by the first device includes at least one of the following: an enabled state, a disabled state, or collecting a parameter of the media information.

In a possible implementation, the method further includes: sending a second message to the first device through the second transmission interface, where the second message is used to indicate the first device to obtain first data, and the first data is one of the following: media information collected by the first device, a parameter of the first device, data stored in the first device, and data received by the first device.

According to the foregoing method, the second device can indicate the first device to obtain the first data, so that the first device and the second device can transmit other data while transmitting the feature data. This helps improve transmission performance and adaptability of a transmission scenario that are required by the first device and the second device to implement the function of the AI application.

In a possible implementation, the method further includes: receiving the first data from the first device through the second transmission interface.

According to the foregoing method, the second transmission interface can support transmission of a plurality of types of data. This improves transmission performance and adaptability of the transmission scenario.

In a possible implementation, the method further includes: sending a second message to the first device through the second transmission interface, where the second message is used to indicate the first device to collect feature data corresponding to third media information; and receiving, through the second transmission interface, third feature data sent by the first device, where the third feature data is determined after the first device performs feature extraction on the collected third media information.

According to the foregoing method, the second device can send the second message, to control the first device to collect the media information and transmit the corresponding third feature data. For example, the third media information to be collected can be determined based on the processing result of the first application or a requirement of the AI application. This flexibly adjusts the media information collected by the first device, so that the AI application can obtain a better result, and improves an overall effect of the AI application.

In a possible implementation, the first message or the second message is determined based on the processing result of the first feature data.

According to the foregoing method, the second device can determine the result of the first application based on the first feature data transmitted by the first device, and generate the first message or the second message based on the result of the first application, so as to feed back the corresponding first message or second message to the first device. The first device can adjust, in response to the first message or the second message, collecting, obtaining, and transmitting the media information, so that the first device and the second device better complete the first application collaboration.

In a possible implementation, the first device further includes a display unit, and the method further includes:
generating a third message in response to the processing result of the first feature data, where the third message is used to indicate content to be displayed by the first device.

According to the foregoing method, the to-be-displayed content can be obtained based on the third message, where the content may be the processing result of the first application, or may be other content that the second device needs to display on the first device, so that the first device and the second device better implement the AI application collaboration, thereby improving use experience of the AI application.

In a possible implementation, there are N first devices, and the method further includes:
receiving a fourth message through the second transmission interface, where the fourth message includes M pieces of first feature data from the N first devices, N and M each are a positive integer greater than 1, and M is greater than or equal to N; and
processing the M pieces of first feature data by using a feature data processing model corresponding to the M pieces of first feature data, to obtain the result of the first application.

According to the foregoing method, the M pieces of first feature data from the plurality of first devices can be transmitted, and the M pieces of first feature data can be processed by using the corresponding feature data processing model in the second device, to implement first application collaboration between the plurality of first devices and the second device, and improve an effect of the first application collaboration.

In a possible implementation, the method further includes:
sending, through the second transmission interface, an authentication request message to the first device, where the authentication request message is used to request the first device to determine whether to establish a communication connection with the second device, and the communication connection is used to confirm permission that the second device controls the first device; and receiving, through the second transmission interface, an authentication response message sent by the second device, where the authentication response message is used to confirm whether the first device establishes the communication connection with the second device.

According to the foregoing method, whether the second device can obtain the permission to control the first device can be confirmed through authentication between the first device and the second device, so that after obtaining the result of the first application based on the first feature data, the second device adjusts the first device to collect the media information. This helps obtain the better result of the first application, and improves the performance of AI application.

In a possible implementation, the method further includes: setting, for the first device in response to the authentication response message sent by the second device, a device identifier corresponding to the first device and an identifier of a distributed system in which the first device and the second device are located, where the device identifier corresponding to the first device and the identifier of the distributed system are used for communication between the first device and the second device; and sending, by the first device, an authentication success message to the second device through a first transmission interface, where the authentication success message includes the device identifier corresponding to the first device, and the identifier of the distributed system in which the first device and the second device are located.

According to the foregoing method, the first device and the second device can be disposed as devices in the distributed system, to better manage the first device and the second device. This helps implement the AI application collaboration by using a plurality of devices.

In a possible implementation, the second device includes a second module, and the authentication success message further includes at least one of the following: an identifier of the second module and an identifier of the second module in the distributed system.

According to the foregoing method, the module in the first device can be disposed as the module in the distributed system, to prepare the second device for controlling modules in the first devices and collaboratively completing the AI application.

In a possible implementation, the second device further includes a third transmission interface, the first device establishes a channel connection with the second device through the third transmission interface, and a message sent by the second device is sent through the third transmission interface after being encapsulated into second bit stream data through the second transmission interface.

According to the foregoing method, the data is encapsulated through the second transmission interface, and the data obtained after encapsulation is sent to the first device through the third transmission interface. Through the third transmission interface, a plurality of transmission protocols can be compatible, and a function such as aggregation transmission can also be implemented. This improves a transmission capability of the second device and compatibility of transmitting media information.

In a possible implementation, the first device establishes the channel connection with the second device through the third transmission interface, and feature data or a message received by the second device is obtained after first bit stream data received through the third transmission interface is decapsulated through the second transmission interface.

According to the foregoing method, the data that is received from the first device through the third transmission interface is decapsulated through the second transmission interface. Through the third transmission interface, the plurality of transmission protocols can be compatible, and the function such as aggregation transmission can also be implemented. This improves the transmission capability of the second device and the compatibility of transmitting media information.

According to a third aspect, this application provides an electronic device. The electronic device includes a memory and one or more processors, the memory is configured to store computer program code, and the computer program code includes computer instructions; and when the computer instructions are executed by the processor, the electronic device is enabled to perform the method according to any one of the first aspect.

According to a fourth aspect, this application provides an electronic device. The electronic device includes a memory and one or more processors, the memory is configured to store computer program code, and the computer program code includes computer instructions; and when the computer instructions are executed by the processor, the electronic device is enabled to perform the method according to any possible implementation of the first aspect or the second aspect.

According to a fifth aspect, this application provides a media information transmission system, including the electronic device according to the third aspect and the electronic device according to the fourth aspect

According to a sixth aspect, this application provides a computer-readable storage medium. The computer-readable storage medium includes program instructions, and when the program instructions are run on an electronic device, the electronic device is enabled to perform any possible method according to the first aspect, or the electronic device is enabled to perform any possible method according to the second aspect.

### BRIEF DESCRIPTION OF DRAWINGS

FIG. 1a is a schematic diagram of a structure of a media information sending device in the conventional technology;
FIG. 1b is a schematic diagram of a structure of a media information receiving device in the conventional technology;
FIG. 1c is a schematic diagram of a structure of a media information receiving device in the conventional technology;
FIG. 2a is a schematic diagram of a media information transmission method according to this application;
FIG. 2b is a schematic diagram of a structure of an AI algorithm model according to this application;
FIG. 3a is a schematic diagram of a structure of a first device according to this application;
FIG. 3b is a schematic diagram of a structure of a second device according to this application;
FIG. 3c is a schematic diagram of an architecture of a distributed system according to this application;
FIG. 4a is a schematic flowchart of a method for establishing a communication connection for AI application collaboration according to this application;
FIG. 4b and FIG. 4c each are a schematic diagram of a search interface of a first device according to this application;
FIG. 4d(a) to FIG. 4e(b) each are a schematic diagram of an AI application collaboration interface according to this application;
FIG. 5a is a schematic diagram of an architecture of a distributed system according to this application;
FIG. 5b is a schematic flowchart of a media information transmission method according to this application;
FIG. 5c is a schematic diagram of a scenario according to this application;
FIG. 5d is a schematic diagram of an AI application according to this application;
FIG. 6a is a schematic diagram of an architecture of a distributed system according to this application;
FIG. 6b is a schematic flowchart of a media information transmission method according to this application;
FIG. 6c is a schematic diagram of a scenario according to this application;
FIG. 6d is a schematic diagram of an AI application according to this application;
FIG. 7a is a schematic diagram of an architecture of a distributed system according to this application;
FIG. 7b is a schematic flowchart of a media information transmission method according to this application;
FIG. 7c is a schematic diagram of a scenario according to this application;
FIG. 7d is a schematic diagram of an AI application according to this application;
FIG. 8 is a schematic diagram of a structure of a possible electronic device according to an embodiment of this application; and
FIG. 9 is a schematic diagram of a structure of another possible electronic device according to an embodiment of this application.

### DESCRIPTION OF EMBODIMENTS

The following first explains and describes some terms in embodiments of this application, to facilitate understanding by a person skilled in the art.

### (1) Media information

Media information in this application may include media information collected by a first device, such as image information, audio information, video information, and sensor information. For example, collected video image information may be audio, a video, a visible light image, a radar, depth, or other information. The first device may include a device or unit that has a media information collection function, such as a camera, a sensor, or a microphone.

For example, the media information is the image information. The media information obtained by the first device in embodiments of this application may be an original image, for example, an output image of a camera, namely, original data obtained by the camera through converting collected light information reflected by an object into a digital image signal, and the original data is not processed. For example, the original image may be data in a raw format. The data in the raw format may include information about the object and a camera parameter. The camera parameter may include international standardization organization (international standardization organization, ISO), a shutter speed, an aperture value, white balance, and the like. Alternatively, the original image may be an input image of an ISP, or the original image may be an input image of a network neural unit, for example, a neural-network processor (neural-network processing unit, NPU) below. An output image of the network neural unit may be a high dynamic range (high dynamic range, HDR) image, or may be another image after processing. This is not limited herein.

The media information obtained by the first device in embodiments of this application may also be an output image of the ISP, namely, an image obtained after the ISP performs processing on the original image to obtain an image in an RGB format or a YUV format obtained and adjusts luminance of the image in the RGB format or the YUV format. A specific value used by the ISP to adjust the luminance of the image in the RGB format or the YUV format may be set by a user, or may be set before delivery of a mobile phone. The media information obtained by the first device may also be an input image of a processor, for example, a graphics processing unit (graphics processing unit, GPU) in the first device below.

It should be noted that, when the media information is an image, the "media information" in embodiments of this application, for example, original media information, media information obtained by the first device, or media information (for example, an HDR image) processed by a second device, may be a picture, or may be a set of some parameters (for example, pixel information, color information, and luminance information).

"A plurality of in embodiments of this application indicates two or more.

### (2) Media information transmit-end device

A media information transmit-end device in embodiments of this application may be a device having a media information collection function. Media information may include one or more of image information, video information, audio information, and sensor information. For example, the media information is video image information. The media information transmit-end device may be a unit or device having a video image collection function, and the collected video image information may be media information such as audio, a video, a visible light image, a radar, or depth.

The media information transmit-end device may include a video collection unit such as a camera, configured to collect video information or image information, and may further include an audio collection unit such as a microphone, configured to collect audio information. The video collection unit may be one or more of units such as an optical lens, an image sensor, and a microphone, and is configured to collect an original media audio (audio, image, or mixing) signal. For example, the media information transmit-end device may be a mobile terminal such as a mobile phone or a tablet, a smart home terminal such as a smart television, an AR/VR head-mounted display, a vehicle-mounted camera, an external camera, or a mobile phone accessory device. For example, the media information transmit-end device may be a terminal device including a media collection unit, such as a smart screen. In this case, the media information transmit-end device collects original audio and video information, and forms an audio and video signal in a standard format after processing. The media information transmit-end device may further serve as a media information transmit end, and after the media information is compressed and encoded, send media information obtained after compressing and encoding to a receive end through a transmission interface or a network. The transmission interface may be a media transmission interface such as an HDMI, a DP, or a USB.

In some other possible scenarios, the media information transmit-end device may alternatively be a device that obtains media information and sends the media information. For example, the media information transmit-end device may obtain the media information from a network or a local storage unit, and send the media information to a second device. In this case, the media information transmit-end device may be a device without the media information collection function, that is, the media information transmit-end device may be only a device having the sending function of sending the media information.

In this case, the media information transmit-end device may compress and encode the obtained audio and video media information, and then send audio and video media information obtained after compressing and encoding to a receive-end device through a transmission interface or a network. The transmission interface may be a media transmission interface such as an HDMI, a DP, or a USB.

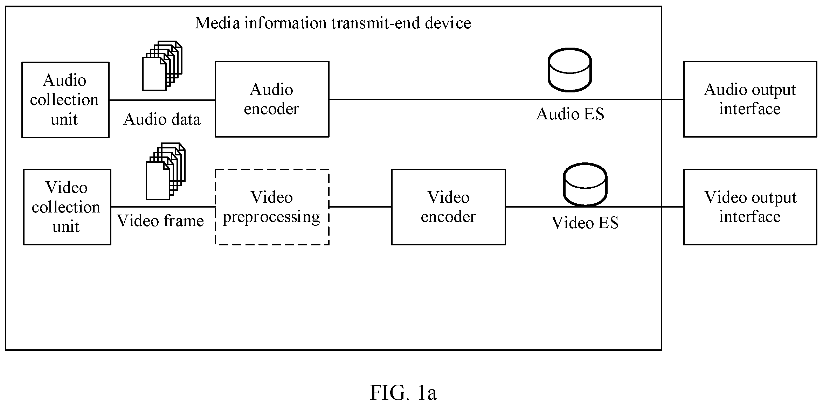

FIG. 1a is a schematic diagram of a structure of a media information transmit-end device according to the conventional technology. The media information transmit-end device shown in FIG. 1a may include a media signal collection unit (for example, an audio collection unit and a video collection unit), a media encoding unit (for example, an audio encoder and a video encoder), and an output interface (for example, an audio output interface and a video output interface). A media signal obtaining unit may be implemented in a plurality of forms. For example, the media signal obtaining unit may include at least one of the following: a media signal collection unit, a media signal receiving unit, or a storage unit. The media signal collection unit may be configured to collect an original media signal. For example, one or more of media signal collection sensors or apparatuses such as an optical lens, an image sensor, a microphone, and a radar may be included. Obtained media information may be information such as audio, a video, a visible light image, a radar, or depth. The media signal receiving unit may be configured to receive a media signal from a network or another device. The storage unit may be configured to locally store a media signal in the transmit-end device, and may be configured to store other information. The media encoding unit is configured to: perform, according to a media encoding protocol, a link layer protocol, and a physical layer protocol, media encoding and channel encoding on a media signal obtained by a first device to obtain a physical layer signal, and transmit the physical layer signal to the output interface, so as to send the physical layer signal to a corresponding media information receive-end device. Optionally, the media information obtaining apparatus may further include a media signal preprocessing unit. The media information preprocessing unit may be configured to perform preprocessing such as noise reduction and recovery on an original audio and video media signal. For example, a video preprocessing unit may be configured to perform preprocessing such as noise reduction and mosaic removal on an original video frame image.

### (3) Media information receive-end device

As a media information receive end, a media information receive-end device may be a media processing device. The receive-end device may be a terminal device such as a mobile phone, a tablet computer, a smart television, or a vehicle-mounted computer. An electronic device may also be referred to as a terminal device. The terminal device may also be referred to as user equipment, an access terminal, a subscriber unit, a subscriber station, a mobile station, a mobile console, a remote station, a remote terminal, a mobile device, a user terminal, a terminal, a wireless communication device, a user agent, or a user apparatus. The terminal device may be a mobile phone (mobile phone), a tablet computer (pad), a computer having a wireless transceiver function, a virtual reality (virtual reality, VR) terminal, an augmented reality (augmented reality, AR) terminal, a wireless terminal in industrial control (industrial control), a wireless terminal in self driving (self driving), a wireless terminal in remote medical (remote medical), a wireless terminal in a smart grid (smart grid), a wireless terminal in transportation safety (transportation safety), a wireless terminal in a smart city (smart city), or a wireless terminal in a smart home (smart home); or a cellular phone, a cordless phone, a personal digital assistant (personal digital assistant, PDA), a handheld device with a wireless communication function, a computing device, or another processing device of a wireless modulation demodulator, or a vehicle-mounted device, a wearable device.

Alternatively, the media information receive-end device may be a terminal device such as a set-top box, a split docking station (DOCK), a smart television, a smart large screen, a mobile phone, a tablet computer or a personal computer (personal computer, PC), a smart screen, a mobile phone, a smart camera, a smart speaker, or a headset. The smart screen may be a multimedia entertainment center at home, an information sharing center, a control management center, and a multi-device interaction center. The terminal device may be a portable terminal that includes functions such as a personal digital assistant and/or a music player, such as a mobile phone, a tablet computer, a wearable device (for example, a smartwatch) with a wireless communication function, or a vehicle-mounted device. An example embodiment of the portable terminal includes but is not limited to a portable terminal with iOS^{®}, Android^{®}, Microsoft^{®}, or another operating system. Alternatively, the portable terminal may be, for example, a laptop computer (Laptop) with a touch-sensitive surface (for example, a touch panel). It should be further understood that in some other embodiments, the foregoing terminal may alternatively be a desktop computer with a touch-sensitive surface (for example, a touch panel).

Alternatively, the media information receive-end device may be a set-top box, a display, an intelligent large screen, a television (television, TV), a mobile phone, or a processor chip in another terminal device having a media information processing function. For example, the processor chip may be a system-on-a-chip (system on chip, SoC), or a baseband chip. Alternatively, a second device may be a computing device deployed with a graphics processing unit (graphics processing unit, GPU), a distributed computing device, or the like.

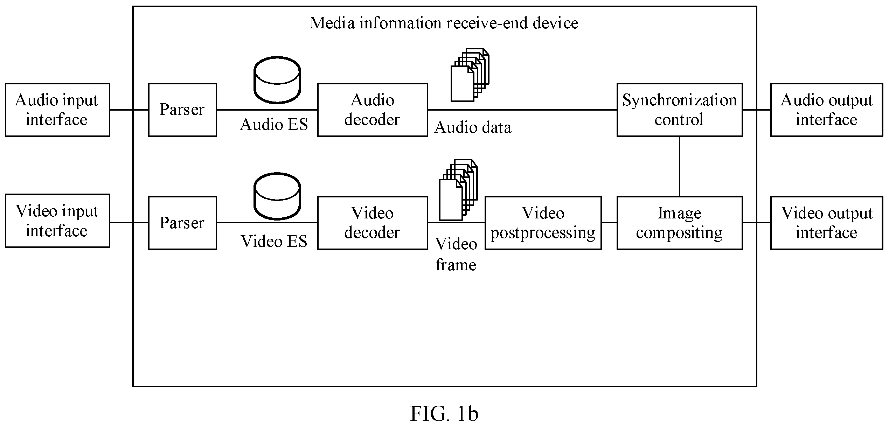

FIG. 1b is a schematic diagram of a structure of a media information receive-end device according to this application. The media processing apparatus may include an input interface, a media decoding unit, and a media information processing unit. The input interface may be configured to receive a media signal sent by a transmit end (for example, a media information transmit-end device). The input interface is configured to receive a physical layer signal from a transmission channel. The media decoding unit is configured to decode a media data signal from the physical layer signal according to a link layer protocol and a physical layer protocol.

For example, the media decoding unit and the media information processing unit may include a parser, an audio decoder, a video decoder, and a video postprocessing unit. The units may be implemented by using hardware, may be implemented by using software, or may be implemented by using hardware in combination with software. For example, the video decoder, and the video postprocessing unit are implemented by hardware logic, units such as AI analysis and display policy processing of media data may be implemented by using software code running on a hardware processor, and other units such as the audio decoder may be implemented by using software.

In a possible scenario, the media information receive-end device decompresses and decodes a signal obtained after encoding from an interface channel to recover audio and video media information. For example, the parser parses a media file in a format such as mp4 to obtain an audio encoding file, or a video encoding file. The audio encoding file may be audio elementary stream (elementary stream, ES) data, and the video encoding file may be video ES data. The audio encoding file is decoded by the audio decoder to obtain audio data, and the video encoding file is processed by the video decoder to obtain a video frame. In addition, the media information receive-end device may be configured to synchronize an image obtained after video postprocessing with the audio data, so that output of an audio output interface is synchronized with output of a video output interface, that is, audio output by the audio output interface is synchronized with a video image output by the video output interface.

Optionally, the media information receive-end device may further include a display unit. In this case, received audio and video media information may be processed, and the audio and video media information may be played. Alternatively, a display unit may be disposed in another device, where the device is a device that establishes a communication connection with the media data processing apparatus in a wireless or wired manner. For example, the display unit may be disposed in a terminal device such as a display (or referred to as a display screen), a television set, or a projector. The display unit may be configured to play a media file processed by the data processing apparatus, and may also play another media file.

In another possible scenario, as computing hardware such as a deep learning algorithm and an NPU develops, artificial intelligence (AI) applications such as machine vision and voice interaction are rapidly popularized. The data processing apparatus may perform AI application processing on a multimedia file, that is, the data processing apparatus may further have an AI processing capability used to implement a function of the corresponding AI application.

In this scenario, after an information set obtained by the receive end from the interface channel is decompressed and decoded to recover the audio and video media information, an operation such as image processing may be performed, and subsequent AI application processing is performed by using an AI software and hardware processing system at the receive end, to obtain an AI analysis result of the media data.

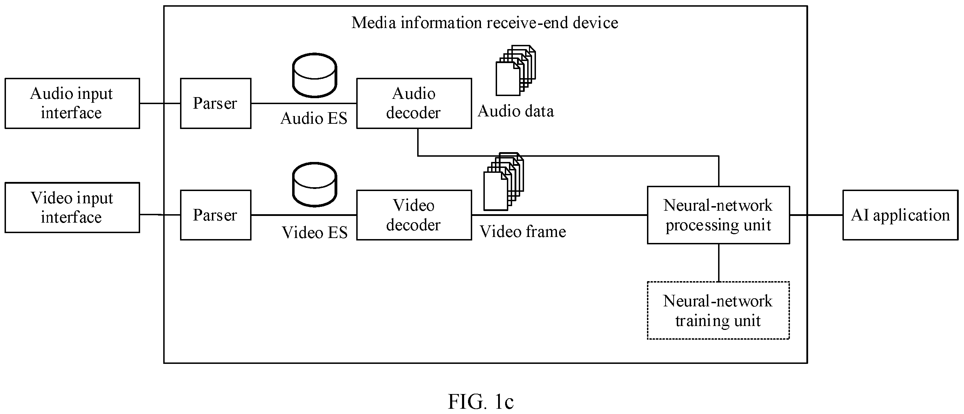

For example, as shown in FIG. 1c, the media information receive-end device may further include a neural-network training unit and a neural-network processing unit.

The neural-network training unit is configured to train an AI algorithm model based on labeled data. A training process of the AI algorithm model may be performed offline on a server, or may be performed online on a device end or a cloud.

The neural-network processing unit is configured to load one or more AI algorithm models, process media data, and obtain an inference result of the AI algorithm model. For example, AI processing is performed on an audio and video signal by using the AI software and hardware system such as the deep learning algorithm and the NPU in the media information receive-end device, to obtain an inference result of detection, classification, recognition, positioning, or tracking. The inference result may be used in the corresponding AI application scenario. For example, the inference result is used to implement functions such as biometric feature recognition, environment recognition, scenario modeling, machine vision interaction, and voice interaction.

### (4) Transmission of media information

Transmission in embodiments of this application includes receiving and/or sending. A media information transmit end and a media information receive end may be connected in a wired or wireless manner and transmit media information. A form of a transmission interface may be an electrical signal transmitted in a wired manner, an optical signal transmitted in an optical fiber, a wireless electrical signal, a wireless optical signal, or the like. A physical channel connection may be established between the media information transmit-end device and the media information receive-end device according to a wired and/or wireless communication protocol such as a copper wire or an optical fiber.

FIG. 1c is a schematic diagram of an architecture of a media information transmission network system according to an embodiment of this application. The network system includes a media information transmit-end device and a media information receive-end device.

A wired manner is used as an example, a physical layer signal for transmitting media information may be transmitted through a transmission channel. The transmission channel may be a physical transmission channel such as a copper wire or an optical fiber. The signal for transmitting the media information may be a wired electrical signal, an optical signal, or the like. A data signal for transmitting the media information may be a data signal of an HDMI protocol, a data signal of a DP protocol, or a data signal of another protocol. For example, an interface standard used by an electronic device to transmit media data includes a high-definition multimedia interface (high-definition multimedia interface, HDMI), a USB port, or a DP interface. The HDMI is an interface for transmitting uncompressed digital high-definition multimedia (a video and/or audio). The HDMI transmits data by using a transition-minimized differential signaling (transition-minimized differential signaling, TMDS) technology. The USB is a serial port bus standard and a technical specification for an input/output interface. For example, a USB Type-C port can support a PD and support transmission of data other than multimedia data.

In a possible manner, to transmit a media signal, before the media information is transmitted, audio and video media information obtained by the media information transmit end is encoded, and after the audio and video encoding, audio and video media information obtained after encoding is transmitted to the media information receive end. In this method, the media signal is transmitted on a channel. A data amount of the media signal is large in a transmission process, a large quantity of computing resources are consumed, costs are high, and an overall system delay is long. This is unfavorable to an AI application that has a high real-time requirement.

In another possible manner, to transmit the media information at a low channel bandwidth, reduce a data amount in a video transmission process, and improve timeliness of video transmission, the media information transmit end may perform preprocessing (for example, resolution compression processing) on the video, that is, lossy compression encoding is performed on the media information, so that a generated lossy compression video is encoded and then sent to the receive-end device. In this manner, because lossy compression is performed, the media information receive end cannot obtain all of the media information, which may affect subsequent application of the media information. In addition, because the media information needs to be compressed and encoded at the transmit end, and the transmitted media information needs to be recovered at the media information receive end, an encoding and decoding process is complex, more computing resources need to be consumed, and an overall system delay is long. This is unfavorable for application to an AI application with a high real-time requirement.

In addition, because the media information is transmitted on both the transmission channel and the receive end, there is a risk of privacy leakage of media content such as an image and audio. Even if privacy information in the media signal is encrypted, there is a risk of leakage in the transmission process and the receive end.

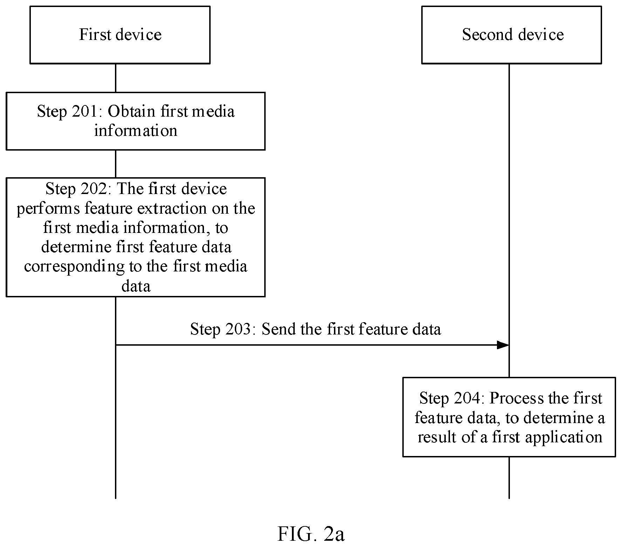

Based on the foregoing problems, FIG. 2a is a schematic flowchart of a media information transmission method in this application. In the method, a corresponding algorithm model is correspondingly set according to a requirement of an AI application (for example, a first application). In this application, when a first device (for example, a media information transmit-end device) and a second device (for example, a media information receive-end device) perform distributed AI application collaboration, the algorithm model obtained through pre-training or an algorithm model obtained through online training may be divided into two parts: an input part and an output part.

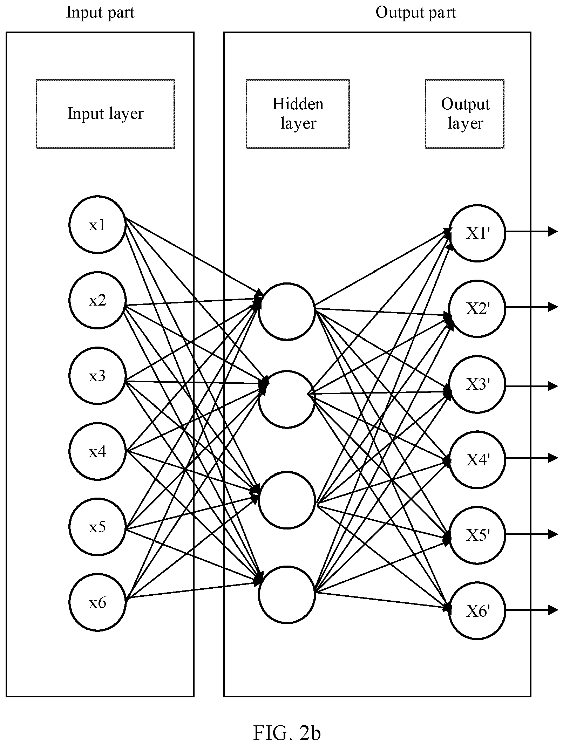

The input part may be the first feature extraction model. The output part may be a feature data processing model that performs postprocessing on feature data. The first feature extraction model may be a feature extraction unit of a convolutional neural network (convolutional neural network). The first feature data processing model may be any neural network model (for example, a convolutional neural network model), or may be another algorithm model. This is not limited herein. In FIG. 2b, descriptions are provided by using a convolutional neural network model as an example.

The input part is a feature extraction part (which may also be referred to as a feature extraction model). The input part may include an input layer of the AI algorithm model, and is configured to perform feature extraction on obtained media information such as audio and a video, to obtain feature data. For example, the output feature data may be feature data obtained after processing such as convolution and weighting is performed at the input layer of the AI algorithm model. In FIG. 2b, x1 to x6 are convolution modules at the input layer. The output part is a part (which may also be referred to as a feature data processing model) that performs postprocessing on the feature data. For example, the output part includes a hidden layer and an output layer of the model. The feature data obtained after feature extraction is performed on the convolution modules x1 to x7 at the input layer in FIG. 2b is input to convolution modules at the hidden layer, and obtained data is input to the output layer. For example, the output layer may be a classifier, and obtain a processing result of the AI algorithm model.

When the first device and the second device perform the AI application collaboration, the input part of the AI algorithm model corresponding to the AI application may be loaded to the first device, and the output part of the AI algorithm model corresponding to the AI application may be loaded to the second device. The first device and the second device each have software and hardware capabilities required by the AI application, for example, include computing hardware such as an NPU that processes the input part of the AI algorithm model and the AI algorithm model used for the AI application collaboration. For example, a processor that processes the AI algorithm model is an NPU. In this case, the input part may be deployed in the NPU in the first device, and the output part may be deployed in the NPU in the second device.

Step 201: The first device obtains first media information.

For a manner in which the first device obtains the first media information, refer to the obtaining manner of the media information transmit-end device in FIG. 1a. Details are not described herein again.

Step 202: The first device performs feature extraction on the first media information, to determine first feature data corresponding to the first media data.

The first device may determine, based on the AI application in the AI application collaboration performed by the first device and the second device, the input part (the first feature extraction model) of the AI algorithm model corresponding to the AI application, load the input part of the AI algorithm model of the AI application to the first device, and perform feature extraction on the first media information.

Step 203: The first device sends the first feature data to the second device.

Step 204: The second device processes the first feature data to determine the result of the first application.

The feature data output by the input part of the AI algorithm model loaded to the first device is transmitted to the second device through a transmission interface in this application, and the final output result of the AI model is obtained after further processing is performed via the output part (the first feature data processing model) of the AI algorithm model loaded to the second device. For example, the media information obtained by the first device may not be transmitted to the second device. Instead, the NPU in the first device runs the input part of the AI algorithm model, converts the media information into the feature data, and then transmits the feature data. In this way, the feature data is transmitted, through the transmission interface that supports transmission of feature data, to the second device for processing by the output part of the AI model.

According to the foregoing method, a processing capability of the feature extraction model is added to the first device that sends the media information, so that the transmit end does not need to send the media information, but sends the feature data obtained after feature extraction is performed on the media information. Because a data amount of the feature data is significantly lower than that of original audio and video information, an additional process of compressing and encoding the media information can be omitted, system power consumption and a delay can be reduced, and costs can be reduced. In addition, this can implement real-time transmission in a condition of a small channel bandwidth, and improve product competitiveness. In addition, the feature data transmitted through the transmission interface cannot be reversely converted into the original media information, which implements a better privacy protection capability.

In some embodiments, before the AI application collaboration is performed, the input part and the output part of the AI algorithm model may be separately stored in the first device and the second device, or both may be first stored in the first device, the second device, or a cloud server. This is not limited herein.

After the first device and the second device establish a connection and determine to collaboratively process an Al task, the first device and the second device separately load the input part and the output part of the algorithm model corresponding to the AI application, and confirm whether the first device and the second device successfully load the input part and the output part of the AI application algorithm model.

For example, the second device stores the input part and the output part of the algorithm model. When the second device confirms that the first device fails to load the input part of the algorithm model corresponding to the AI application, the second device confirms, based on whether the first device has a capability of loading and processing the input part of the algorithm model corresponding to the AI application, whether the first device can perform the AI application collaboration. If the first device has the capability of loading and processing the input part of the algorithm model corresponding to the AI application, data of the input part of the model is transmitted to the first device through a data transmission channel of a transmission interface, so that the first device loads the input part of the AI algorithm model.

There may be a plurality of reasons for a loading failure. One possible reason is that, for example, the first device does not store the input part of the algorithm model corresponding to the AI application. Another possible reason is that a version of the input part of the algorithm model corresponding to the AI application, stored on the first device is not a version required by the AI application. In this case, the input part may be obtained, based on a model identifier of the algorithm model corresponding to the AI application and a version identifier of the input part of the algorithm model corresponding to the AI application, from a corresponding device that stores the input part of the algorithm model corresponding to the AI application. With reference to the foregoing example, the input part may be obtained from the second device, or may be obtained from a corresponding server. This is not limited herein.

For example, a server in a network stores the input part and the output part of the algorithm model. In this case, when the server confirms that the first device fails to load the input part of the algorithm model corresponding to the AI application, the server confirms, based on whether the first device has a capability of loading and processing the input part of the algorithm model corresponding to the AI application, whether the first device can perform the AI application collaboration. If the first device has the capability of loading and processing the input part of the algorithm model corresponding to the AI application, data of the input part of the model is transmitted to the first device through a data transmission channel of a transmission interface. Correspondingly, when the server confirms that the second device fails to load the output part of the algorithm model corresponding to the AI application, the server confirms, based on whether the second device has a capability of loading and processing the output part of the algorithm model corresponding to the AI application, whether the second device can perform the AI application collaboration. If the second device has the capability of loading and processing the output part of the algorithm model corresponding to the AI application, data of the output part of the model is transmitted to the second device through a data transmission channel of a transmission interface, so that the second device loads the output part of the algorithm model.

It should be noted that there may be a plurality of first devices. To be specific, first feature extraction models of the plurality of first devices are used as the input part of the algorithm model of the second device, to implement the AI application collaboration of the algorithm models of the plurality of first devices and the second device. In addition, for different AI applications, the first feature extraction models of the first devices may also be same feature extraction models, or may be different feature extraction models, and may be correspondingly set based on specific applications. This is not limited herein.

Label information for training the algorithm model is determined according to a requirement of the AI application. The label information may be label information obtained after manual labeling is input through a network or man-machine interaction, or may be label information such as standard label information and clustering information. Therefore, a neural-network training unit in the second device trains the AI algorithm model based on determined label data.

In a training process of the AI algorithm model, training may be performed offline or online on a server; or training or optimization may be performed online on a device end or a cloud. For example, a parameter of the AI algorithm model may be updated by using methods such as online learning, transfer learning, reinforcement learning, and federated learning, to implement model retraining or re-optimization. Optionally, the model may alternatively be obtained after collaborative training or optimization is performed by using a distributed system in this application. In this application, a specified model ID may be allocated to each AI algorithm model obtained after training.

The distributed system in this application performs distributed collaborative training on the AI algorithm model. In the training mode, the first device collects or inputs input information of the model, and transmits the information through the transmission interface to the NPU in the first device, so as to output the feature data for performing feature extraction on a training sample. The second device trains, based on the label information, the feature data for the training sample sent by the first device, to obtain feedback data of the output part of the AI algorithm model. The second device may reversely transmit the feedback data of the output part of the AI algorithm model to the input part of the model through a transmission interface for training of the input part of the first device, so as to implement collaborative adjustment of two parts of network parameters. This implements collaborative training between the first device and the second device.

For example, collaborative training is performed by using the first feature extraction model and the first feature data processing model. In this case, the first device may perform feature extraction on the training sample by using the first feature extraction model, to generate first training feature data; and send the first training feature data to the data processing apparatus. The second device trains the first feature data processing model based on the received first training feature data and the label information of the training sample, to determine the feedback data for training the first feature extraction model; and sends the feedback data to the first device. The first device trains the first feature extraction model based on the feedback data.

When online training starts, an initial version ID may be allocated to the model obtained through offline training (for example, the initial version ID corresponds to the first feature extraction model and the first feature data processing model). If the model is retrained or re-optimized, the initial version ID is updated to a specified version ID. After each training or online optimization of a model, a version ID obtained after update is allocated to an input part and an output part of the model (for example, the version ID obtained after update corresponds to a second feature extraction model and a second feature data processing model). Therefore, the input part and the output part of the model are jointly identified by using a model ID and a version ID. Further, corresponding identifiers may be set for the input part and the output part of the model. For example, the model ID, the version ID, and an input part ID may be set for the input part of the model; and the model ID, the version ID, and an output part ID may be set for the input part of the model. In another possible implementation, the model ID and the version ID may be correspondingly set for the input part and the output part of the model. For example, the model ID includes a model input part ID and a model output part ID, and the version ID includes an input part ID of a model version and an output part ID of the model version. A specific implementation is not limited in this application.

In this case, when performing the AI application collaboration corresponding to the AI algorithm model, the first device may perform feature extraction on collected second media information by using the second feature extraction model based on the version obtained after update, to obtain second feature data; and send the second feature data to the second device. In this case, the second device may determine the second feature data processing model based on the model ID and the version ID obtained after update, and obtain the inference result of the AI algorithm model corresponding to the AI application by using the second feature data processing model based on the second feature data.

It is considered that there is a scenario of a plurality of first devices. In this case, the second device may receive training data from the plurality of first devices to train a neural network model of the second device, correspondingly generate feedback data for training the models of the plurality of first devices, and separately send the plurality of pieces of feedback data to the plurality of first devices, so that the plurality of first devices can perform model training based on the corresponding feedback data.

Optionally, when there are a plurality of units such as a plurality of media information collection units, a storage unit, and a media signal receiving unit in the distributed system corresponding to the AI application collaboration, unit identifiers may be set for the units. Therefore, the second device can perform addressing based on a unit ID of each unit to send control information and feedback data used to train the AI algorithm model. For example, when the control information is sent to the media information collection unit, a sent control information message may carry a unit ID of the media information collection unit. When the feedback data is sent to the neural-network training unit, a sent control information message may carry a unit ID of the neural-network training unit.

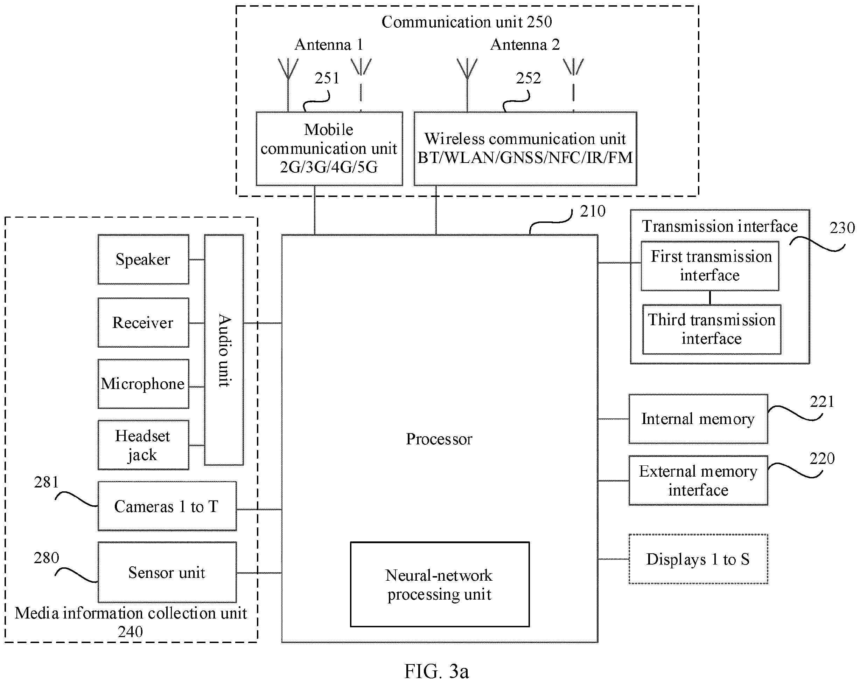

FIG. 3a is a schematic diagram of a structure of a first device according to an embodiment of this application. The first device 200 may include a processor 210, an external memory interface 220, an internal memory 221, a transmission interface 230, a media information collection unit 240, and a communication unit 250. The media information collection unit 240 may include a microphone, a headset jack, an audio unit, a speaker, a sensor unit 280, a camera 281, and the like. The communication unit 250 may include an antenna 1, an antenna 2, a mobile communication unit 251, and a wireless communication unit 252.

The processor 210 may include one or more processing units. For example, the processor 210 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and a neural-network processing unit, for example, a neural-network processor (Neural-network Processing Unit, NPU). Different processing units may be independent components, or may be integrated into one or more processors. The controller may be a nerve center and a command center of the first device 200. The controller may generate an operation control signal based on an instruction operation code and a time sequence signal, to complete control of instruction fetching and instruction execution.

In this embodiment of this application, the neural-network processor may include a neural-network processing unit. The neural-network processing unit is configured to: load an input part of an AI algorithm model corresponding to the first device, process media information (for example, media information obtained by the first device) input to the neural-network processing unit, and output feature data of the media information.

The media information is processed by using the input part, of the AI algorithm model, loaded to the neural-network processing unit in the first device, and the abstract feature data is obtained after processing. The first device transmits the feature information to a second device through the transmission interface in the first device, so that the second device performs further processing by using an output part of the model, and obtains an output result of an AI application.

The AI algorithm model may be determined through training by a server, or may be determined through separate training by the first device or the second device, or may be determined through collaborative training by the first device and the second device. The AI algorithm model may be trained offline or online. The first device uses the input part of the AI algorithm model, and the second device uses the output part of the AI algorithm model. Therefore, correspondingly, a training process can alternatively be a process in which the first device trains the input part of the AI algorithm model, and the second device trains the output part of the AI algorithm model, to implement collaborative training of the AI algorithm model.

Optionally, the neural-network processor may further include a neural-network training unit. The neural-network training unit enables the first device to train the AI algorithm model based on labeled data. The training process may be performed offline on the first device, or may be performed online on a first device end, or may be performed in collaboration with the second device.

During collaborative training, training data obtained through online training may be sent to the second device, so that the second device can train the model of the second device based on the training data obtained by the first device and generate feedback data for training the model in the first device; and the first device trains the neural network model of the first device based on the feedback data.

A memory may be disposed in the processor 210, and is configured to store instructions and data. In some embodiments, the memory in the processor 210 is a cache. The memory may store instructions or data just used or cyclically used by the processor 210. If the processor 210 needs to use the instructions or the data again, the processor may directly invoke the instructions or the data from the memory. This avoids repeated access, reduces waiting time of the processor 210, and improves system efficiency.

The processor 210 may run the media information transmission method provided in embodiments of this application, to implement multi-device collaboration of the first device in the AI application, thereby improving user experience. After the processor 210 runs the media information transmission method provided in embodiments of this application, the processor 210 may generate and send the feature data based on the obtained media information; and may further receive control instructions from the second device, to control the media collection unit in the first device. Optionally, when the first device includes a display, the first device may further receive media information from the second device and instructions for playing the media information, and play the media information on the display. The processor 210 may include different components. For example, when a CPU and a GPU are integrated, the CPU and the GPU may cooperate to perform the media information transmission method provided in embodiments of this application. For example, in the media information transmission method, some algorithms are executed by the CPU, and other algorithms are executed by the GPU, to obtain high processing efficiency.

The internal memory 221 may be configured to store computer-executable program code. The executable program code includes instructions. The processor 210 performs various function applications of the first device 200 and data processing by running the instructions stored in the internal memory 221. The internal memory 221 may include a program storage area and a data storage area. The program storage area may store code of an operating system, an application (for example, a camera application or a WeChat application), and the like. The data storage area may store data (for example, an image or a video collected by the camera application) created during use of the first device 200 and the like.

The internal memory 221 may further store one or more computer programs corresponding to the data transmission algorithm provided in embodiments of this application. The one or more computer programs are stored in the memory 221, and are configured to be executed by the one or more processors 210. The one or more computer programs include instructions, and the instructions may be used to perform steps in the corresponding embodiments in FIG. 2a to FIG. 7b. The computer programs may be used to implement the media information transmission method in embodiments of this application. When code of a data transmission algorithm stored in the internal memory 221 is run by the processor 210, the processor 210 may run the media information transmission method in embodiments of this application.

In addition, the internal memory 221 may include a high speed random access memory, and may further include a nonvolatile memory, for example, at least one magnetic disk storage device, a flash memory device, or a universal flash storage (universal flash storage, UFS).

Certainly, the code of the data transmission algorithm provided in this embodiment of this application may be alternatively stored in an external memory. In this case, the processor 210 may run, by using the external memory interface 220, the code of the data transmission algorithm stored in the external memory, and the processor 210 may perform the media information transmission method in embodiments of this application.

The camera 281 (a front-facing camera, a rear-facing camera, or a camera that may serve as both a front-facing camera and a rear-facing camera) is configured to capture a static image or a video. Usually, the camera 281 may include a photosensitive element such as a lens group and an image sensor. The lens group includes a plurality of lenses (convex lenses or concave lenses), and is configured to: collect an optical signal reflected by a to-be-photographed object, and transfer the collected optical signal to an image sensor. The image sensor generates an original image of the to-be-photographed object based on the optical signal.

The first device 200 may implement an audio function such as music playing and recording through the audio unit 270, the speaker 270A, the receiver 270B, the microphone 270C, the headset jack 270D, the application processor, and the like. Optionally, the first device 200 may receive input from a button 290, and generate button signal input related to user setting and function control of the first device 200.

The sensor unit 280 may include a distance sensor, a gyro sensor, an acceleration sensor, an optical proximity sensor, a fingerprint sensor, a touch sensor, a temperature sensor, a pressure sensor, a distance sensor, a magnetic sensor, an ambient optical sensor, a barometric pressure sensor, a bone conduction sensor, and the like, which are not shown in the figure.

The transmission interface in the first device 200 is configured to connect to another device, so that the first device 200 transmits media information with the another device. In a possible implementation, the transmission interfaces in the first device 200 may include a first transmission interface and a third transmission interface. The processor in the first device is connected to the first transmission interface, data to be sent to the second device 300 is encapsulated into first bit stream data, and the first bit stream data is sent to a third transmission interface in the second device through the third transmission interface. Second bit stream data sent by the second device may be received through the third transmission interface, so that data or a message corresponding to the second bit stream data (the second bit stream data is data or a message encapsulated by the second device through a second transmission interface) is obtained through decapsulation through the first transmission interface. Therefore, a transmission channel established through the third transmission interface in the first device and the third transmission interface in the second device can support bidirectional transmission.

In some other embodiments, a plurality of first devices 200 may further encapsulate, through first transmission interfaces in the plurality of first devices, first feature data to be sent to the second device. For example, N first devices need to send M pieces of first feature data. In this case, the M pieces of first feature data may be encapsulated into independent bit stream data through first transmission interfaces in the N first devices (the M pieces of first feature data may be separately encapsulated into M pieces of bit stream data, or the M pieces of first feature data may be separately encapsulated into N pieces of bit stream data based on the N first devices). The bit stream data obtained after encapsulation is packed into a data packet (for example, a fourth message) through the third transmission interface, and the data packet is sent to the third transmission interface in the second device. Therefore, the second device can receive, through the third transmission interface, the fourth message obtained after separate encapsulation is performed on the M pieces of first feature data corresponding to the N first devices, decapsulate the fourth message through the second transmission interface, to obtain the M pieces of first feature data, and forward, based on a feature data processing model corresponding to the M pieces of first feature data, the M pieces of first feature data to the corresponding feature data processing model for processing, to obtain a result of a first application.

When the transmission interface is a wired transmission interface 230, a cable applicable to the transmission interface 230 may be inserted into the transmission interface 230 or removed from the transmission interface 230, to contact and separate from the first device 200.

When the transmission interface in the first device 200 is a wireless communication interface, a wireless communication function of the first device 200 may be implemented through the antenna 1, the antenna 2, the mobile communication unit 251, the wireless communication unit 252, the modem processor, the baseband processor, and the like.

The antenna 1 and the antenna 2 are configured to transmit and receive electromagnetic wave signals. Each antenna in the first device 200 may be configured to cover one or more communication frequency bands. Different antennas may be multiplexed to improve antenna utilization. For example, the antenna 1 may be multiplexed as a diversity antenna of a wireless local area network. In some other embodiments, the antenna may be used in combination with a tuning switch.

The mobile communication unit 251 may provide a solution that is applied to the first device 200 and that includes wireless communication such as 2G, 3G, 4G, and 5G. The mobile communication unit 251 may include at least one filter, a switch, a power amplifier, a low noise amplifier (low noise amplifier, LNA), and the like. The mobile communication unit 251 may receive an electromagnetic wave through the antenna 1, perform processing such as filtering and amplification on the received electromagnetic wave, and transmit a processed electromagnetic wave to the modem processor for demodulation. The mobile communication unit 251 may further amplify a signal modulated by the modem processor, and convert the signal into an electromagnetic wave for radiation through the antenna 1. In some embodiments, at least some function units in the mobile communication unit 251 may be disposed in the processor 210. In some embodiments, at least some function units of the mobile communication unit 251 and at least some units of the processor 210 may be disposed in a same component. In this embodiment of this application, the mobile communication unit 251 may be configured to exchange information with a second device, that is, send a media information transmission request to the second device, and encapsulate the sent media information transmission request into a message in a specified format; or the mobile communication unit 251 may be configured to receive the media information transmission request sent by the second device.

The modem processor may include a modulator and a demodulator. The modulator is configured to modulate a to-be-sent low-frequency baseband signal into a medium/high-frequency signal. The demodulator is configured to demodulate a received electromagnetic wave signal into a low-frequency baseband signal. Then, the demodulator transmits the low-frequency baseband signal, obtained through demodulation, to the baseband processor for processing. The low-frequency baseband signal is processed by the baseband processor and then transmitted to the application processor.

The modem processor may further include a channel encoding unit and a channel decoding unit. The channel encoding unit is configured to: perform, according to a link layer protocol and a physical layer protocol, channel encoding on a data signal obtained by the first device to obtain a physical layer signal, and transmit the physical layer signal to the transmission interface. The data signal may be feature data determined after feature extraction is performed on media information, or may be data of media information. Certainly, information such as another parameter and a device status that need to be sent to the second device may also be transmitted to a second device (for example, a second device) on a corresponding transmission channel through the transmission interface according to a corresponding transmission protocol. The information may be sent together with the media information, or may be sent by using another transmission protocol. A specific implementation is not limited in this application. A control information decoding unit may also be included, and is configured to decode a control signal sent by the second device, and may be configured to decode feedback data received from the second device, where the feedback information is used for online training and optimization of a model.

In a possible implementation, the application processor outputs a sound signal by using an audio device (which is not limited to the speaker 270A, the receiver 270B, and the like), or displays an image or a video on a display. In some embodiments, the modem processor may be an independent component. In some other embodiments, the modem processor may be independent of the processor 210, and is disposed in a same component as the mobile communication unit 251 or another function unit.

The wireless communication unit 252 may provide a solution that is applied to the first device 200 and that includes wireless communication such as a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, and an infrared (infrared, IR) technology. The wireless communication unit 252 may be one or more components integrating at least one communication processing unit. The wireless communication unit 252 receives an electromagnetic wave through the antenna 2, performs frequency modulation and filtering processing on an electromagnetic wave signal, and sends a processed signal to the processor 210. The wireless communication unit 252 may further receive a to-be-sent signal from the processor 210, perform frequency modulation and amplification on the signal, and convert a processed signal into an electromagnetic wave for radiation through the antenna 2. In this embodiment of this application, the wireless communication unit 252 is configured to establish a connection with the second device, and cooperatively complete a task of an AI application via the second device. Alternatively, the wireless communication unit 252 may be configured to access an access point device, and send, to the second device, a message corresponding to a media information transmission request of feature data, or receive, from the second device, a message corresponding to a media information transmission request. Optionally, the wireless communication unit 252 may be configured to receive media information from another device.

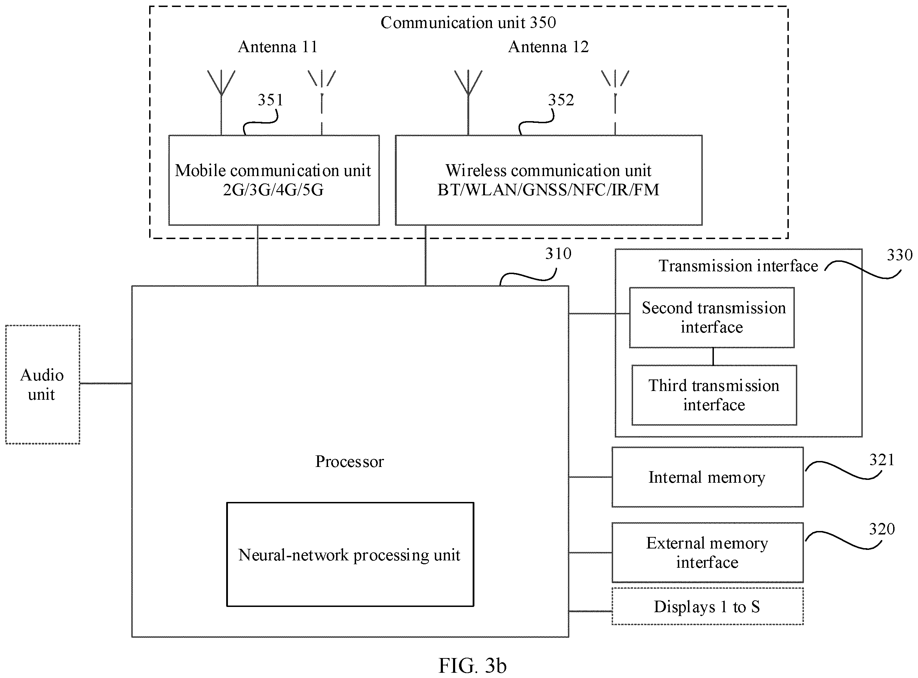

FIG. 3b is a schematic diagram of a structure of a second device according to an embodiment of this application.

The second device 300 may include a processor 310, an external memory interface 320, an internal memory 321, a transmission interface 330, an antenna 11, an antenna 12, a mobile communication unit 351, and a wireless communication unit 352.

The processor 310 may include one or more processing units. For example, the processor 310 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and a neural-network processor (Neural-network Processing Unit, NPU). Different processing units may be independent components, or may be integrated into one or more processors. The controller may be a nerve center and a command center of the second device 300. The controller may generate an operation control signal based on an instruction operation code and a time sequence signal, to complete control of instruction fetching and instruction execution.

In this embodiment of this application, the neural-network processor may include a neural-network processing unit. The neural-network processing unit is configured to load and mount output parts of one or more AI algorithm models. Feature data is processed by the output part of the AI algorithm model corresponding to the feature data, the feature data obtained after decoding is transmitted to the neural-network processing unit in the second device, and the feature data is processed by the output part of the AI algorithm model loaded by the neural-network unit, to obtain a final inference result processed by the AI algorithm, and obtain an inference result of detection, classification, recognition, positioning, or tracking. The inference result is output to an artificial intelligence application. The artificial intelligence application uses the inference result to implement functions such as biometric feature recognition, environment recognition, scenario modeling, machine vision interaction, and voice interaction.

Optionally, the second device in this embodiment of this application may further include a neural-network training unit. The neural-network training unit enables the second device to train the AI algorithm model by using labeled data. The training process may be performed offline on the second device, or may be performed online on a second device end, or may be performed in collaboration with a first device. Optionally, when the first device and the second device collaboratively perform joint online training and optimization on the AI model, feedback data obtained through online training may be sent from the output part of the model to an input part of the model through a transmission interface via an interface system, so that the first device trains a neural network model of the first device based on the feedback data. In this case, the second device may further send the online training feedback data of the AI model to the first device.

It is considered that there is a scenario of a plurality of first devices. In this case, the second device may receive training data from the plurality of first devices to train the neural network model of the second device, correspondingly generate feedback data for training the models of the plurality of first devices, and separately send the plurality of pieces of feedback data to the plurality of first devices, so that the plurality of first devices can perform model training based on the corresponding feedback data.

A memory may be disposed in the processor 310, and is configured to store instructions and data. In some embodiments, the memory in the processor 310 is a cache. The memory may store instructions or data just used or cyclically used by the processor 310. If the processor 310 needs to use the instructions or the data again, the processor may directly invoke the instructions or the data from the memory. This avoids repeated access, reduces waiting time of the processor 310, and improves system efficiency.

The processor 310 may run the media information transmission method provided in embodiments of this application, to implement the AI application collaboration between the second device and the first device, thereby improving user experience. After the processor 310 runs the media information transmission method provided in embodiments of this application, the processor 310 may generate and send the feature data based on the obtained media information; and may also send control instructions to the first device, to control a media collection unit in the first device. Optionally, when the first device includes a display, media information and instructions for playing the media information may be sent to the first device, and the media information is played on the display. Optionally, when the second device includes a display, the second device may receive media information sent by the first device, or after the second device receives feature data from the first device, the second device processes the feature data, and when an obtained inference result processed by using the AI algorithm is to-be-played media information, the second device plays the media information on the display.

The processor 310 may include different components. For example, when a CPU and a GPU are integrated, the CPU and the GPU may cooperate to perform the media information transmission method provided in embodiments of this application. For example, in the media information transmission method, some algorithms are executed by the CPU, and other algorithms are executed by the GPU, to obtain high processing efficiency.

The internal memory 321 may be configured to store computer-executable program code. The executable program code includes instructions. The processor 310 performs various function applications of the second device 300 and data processing by running the instructions stored in the internal memory 321. The internal memory 321 may include a program storage area and a data storage area. The program storage area may store code of an operating system, an application (for example, a camera application or a WeChat application), and the like. The data storage area may store data (for example, an image or a video collected by the camera application) created during use of the second device 300 and the like.

The internal memory 321 may further store one or more computer programs corresponding to the data transmission algorithm provided in embodiments of this application. The one or more computer programs are stored in the memory 321, and are configured to be executed by the one or more processors 310. The one or more computer programs include instructions, and the instructions may be used to perform steps in the corresponding embodiments in FIG. 2a to FIG. 7a. The computer programs may be used to implement the media information transmission method in embodiments of this application. When code of a data transmission algorithm stored in the internal memory 321 is run by the processor 310, the processor 310 may run the media information transmission method in embodiments of this application.

In addition, the internal memory 321 may include a high speed random access memory, and may further include a nonvolatile memory, for example, at least one magnetic disk storage device, a flash memory device, or a universal flash storage (universal flash storage, UFS).

Certainly, the code of the data transmission algorithm provided in this embodiment of this application may be alternatively stored in an external memory. In this case, the processor 310 may run, by using the external memory interface 320, the code of the data transmission algorithm stored in the external memory, and the processor 310 may perform the media information transmission method in embodiments of this application.

The transmission interface 330 in the second device 300 is configured to connect to another device, so that the second device 300 transmits media information with the another device.

In a possible implementation, the transmission interfaces in the second device 300 may include a second transmission interface and a third transmission interface. The second transmission interface is connected to the processor in the second device, data to be sent to the second device 300 is encapsulated into second bit stream data through the second transmission interface, and the second bit stream data is sent to the third transmission interface in the first device through the third transmission interface. First bit stream data from the first device may be received through the third transmission interface, and feature data, data, control information, feedback data, handshake data, a message, and the like that are sent by the first device are obtained through decapsulation through the second transmission interface. Therefore, a transmission channel established through the third transmission interface in the first device and the third transmission interface in the second device can support bidirectional transmission.

In some other embodiments, the second device 300 may further receive a fourth message through the second transmission interface in the second device, where the fourth message includes M pieces of first feature data of N first devices, N and M each are a positive integer greater than 1, and M is greater than or equal to N. Specifically, the second device may receive, through the third transmission interface, the fourth message (N data packets may be encapsulated or M data packets may be encapsulated in the fourth message, which is not limited herein) obtained after separately encapsulation is performed on the M pieces of first feature data of the N first devices. The second device decapsulates the fourth message through the second transmission interface, to obtain the M pieces of first feature data, and forwards, based on a feature data processing model corresponding to the M pieces of first feature data, the M pieces of first feature data to the corresponding feature data processing model for processing, to obtain a result of a first application.

When the transmission interface 330 is a wired transmission interface, a cable applicable to the transmission interface may be inserted into the transmission interface 330 or removed from the transmission interface 330, to contact and separate from the second device 300.

When the transmission interface in the second device 300 is a wireless communication interface, a wireless communication function of the second device 300 may be implemented through the antenna 11, the antenna 12, the mobile communication unit 351, the wireless communication unit 352, the modem processor, the baseband processor, and the like.

The antenna 11 and the antenna 12 are configured to transmit and receive electromagnetic wave signals. Each antenna in the second device 300 may be configured to cover one or more communication frequency bands. Different antennas may be multiplexed to improve antenna utilization. For example, the antenna 11 may be multiplexed as a diversity antenna of a wireless local area network. In some other embodiments, the antenna may be used in combination with a tuning switch.

The mobile communication unit 351 may provide a solution that is applied to the second device 300 and that includes wireless communication such as 2G, 3G, 4G, and 5G. The mobile communication unit 351 may include at least one filter, a switch, a power amplifier, a low noise amplifier (low noise amplifier, LNA), and the like. The mobile communication unit 351 may receive an electromagnetic wave through the antenna 11, perform processing such as filtering and amplification on the received electromagnetic wave, and transmit a processed electromagnetic wave to the modem processor for demodulation. The mobile communication unit 351 may further amplify a signal modulated by the modem processor, and convert the signal into an electromagnetic wave for radiation through the antenna 11. In some embodiments, at least some function units in the mobile communication unit 351 may be disposed in the processor 310. In some embodiments, at least some function units of the mobile communication unit 351 and at least some units of the processor 310 may be disposed in a same component. In this embodiment of this application, the mobile communication unit 351 may be configured to exchange information with the second device, that is, send a media information transmission request to the first device, where the received media information transmission request may be encapsulated into a message in a specified format; or the mobile communication unit 351 may be configured to send a media information transmission instruction to a first device or send a control information message to a first device.

The modem processor may include a modulator and a demodulator. The modulator is configured to modulate a to-be-sent low-frequency baseband signal into a medium/high-frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor.

The modem processor may further include a channel encoding unit and a channel decoding unit.

The channel decoding unit may decode, according to a link layer protocol and a physical layer protocol, a received physical layer signal from the first device to obtain a data signal sent by the first device. The data signal may be feature data (the feature data may be used as input of the neural-network processing unit) determined after the first device performs feature extraction on media information, or may be data of media information. Certainly, information such as another parameter and a device status that need to be received by the second device may also be transmitted on a corresponding transmission channel through the transmission interface according to a corresponding transmission protocol. The information may be sent together with the media information, or may be sent by using another transmission protocol. A specific implementation is not limited in this application.

In this case, the channel encoding unit may be configured to encode a data signal sent by the second device. For example, the data signal may be a control instruction sent to the first device. The channel encoding unit in the second device may perform channel encoding on the control instruction according to an interface transmission protocol. After being modulated through the transmission interface, a control signal obtained after encoding is sent to a control channel, and is transmitted to the first device through the transmission interface in the second device and the control channel, so that the first device can receive the control instruction through the control channel. The channel encoding unit may be configured to encode feedback data sent to the first device, where the feedback information is used for online training and optimization of a model of the first device.

In a possible implementation, the application processor outputs a sound signal by using an audio device, or displays an image or a video on a display. In some embodiments, the modem processor may be an independent component. In some other embodiments, the modem processor may be independent of the processor 310, and is disposed in a same component as the mobile communication unit 351 or another function unit.

The wireless communication unit 352 may provide a solution that is applied to the second device 300 and that includes wireless communication such as a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, and an infrared (infrared, IR) technology. The wireless communication unit 352 may be one or more components integrating at least one communication processing unit. The wireless communication unit 352 receives an electromagnetic wave through the antenna 12, performs frequency modulation and filtering processing on an electromagnetic wave signal, and sends a processed signal to the processor 310. The wireless communication unit 352 may further receive a to-be-sent signal from the processor 310, perform frequency modulation and amplification on the signal, and convert a processed signal into an electromagnetic wave for radiation through the antenna 12. In this embodiment of this application, the wireless communication unit 352 is configured to establish a connection with the first device, and cooperatively complete a task of an AI application via the first device. In some embodiments, the wireless communication unit 352 may be configured to: access an access point device, receive a message, corresponding to a feature data transmission request, sent by the first device, or send a message corresponding to a media information transmission request to the first device, and send a message corresponding to control information to the first device. Optionally, the wireless communication unit 352 may be configured to receive media information from another first device or information from another device.

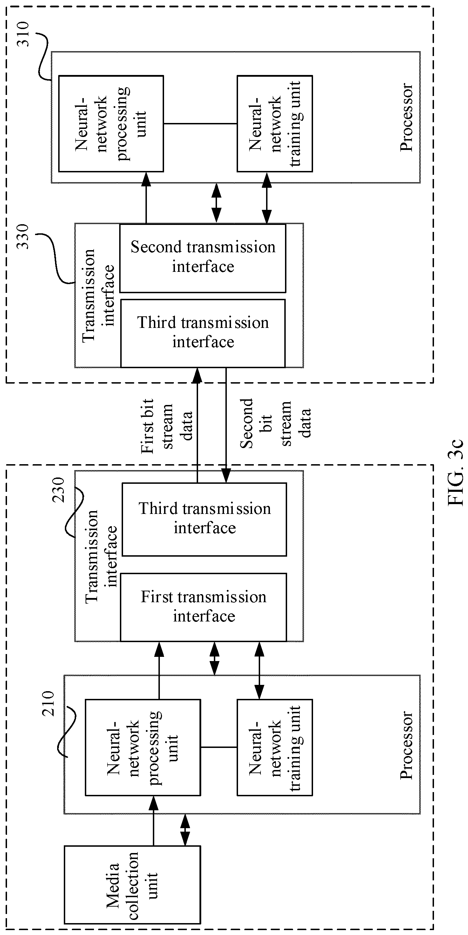

FIG. 3c is a schematic diagram of an architecture of a distributed system for AI application collaboration formed by a first device and a second device according to an embodiment of this application. Transmission interfaces provided in this embodiment of this application may be the transmission interface 230 in the first device or the communication unit 250 in the first device, and the transmission interface 330 in the second device or the communication unit 350 in the second device. Descriptions are provided by using an example in which the transmission interfaces in the figure are the transmission interface 230 in the first device and the transmission interface 330 in the second device. The transmission interface provided in this embodiment of this application is applicable to a plurality of transmission protocols, and may also be referred to as an aggregation interface or a new interface (NEW interface), or may have another name. This is not limited in this embodiment of this application.

A transmission interface protocol in this embodiment of this application supports transmission of feature data output by the first device. A data amount of the feature data obtained through processing by an input part of an AI model is far less than an amount of original audio and video media data. This occupies low bandwidth, and resolves a problem that a large quantity of bandwidth resources are consumed due to high bandwidth transmission. Especially in wireless communication technologies, such as Wi-Fi and Bluetooth, with low bandwidth, real-time transmission over low-bandwidth transmission interfaces is implemented, which creates conditions for real-time distributed AI processing. In addition, the original media information cannot be recovered based on the transmitted feature data, this can resolve a potential risk of privacy data leakage, and improve data security of media information transmission.

In some embodiments, the transmission interface protocol in this embodiment of this application may support the first device and the second device in negotiating AI processing software and hardware capabilities such as an NPU architecture, and a model identifier (ID) and a version identifier (ID) of a loaded AI algorithm model, to determine whether to form the distributed system for the AI application collaboration through coordination, thereby completing a processing task of a corresponding AI application. In a capability negotiation process, the transmission interface supports bidirectional transmission of the AI algorithm model. For example, a part or entire of the AI algorithm model stored in the first device or the second device or the AI algorithm model obtained by a network may be transmitted to the first device or the second device. This can load the input part and an output part of the AI algorithm model.

Optionally, through the transmission interfaces in this embodiment of this application, feedback data, for online training, output by the second device may be sent to the first device, so as to perform online training or online optimization on information of the input part of the AI algorithm model of the first device; and feature data for further training is fed back to the second device. This can implement online training and online optimization of the AI algorithm model of the first device and the second device.

In some other embodiments, the transmission interface may be configured to transmit a plurality of types of data. The transmission interface may also transmit the feature data output by the input part of the AI model, and may further transmit control messages such as handshake signals and control signals bidirectionally. The transmission interface may also transmit a signal of media information or another data signal. The transmission interface may perform aggregated transmission and bidirectional transmission simultaneously on the foregoing signals. For example, the transmission interface may support compatible transmission of media information and AI feature data. The transmission interface may transmit standard media information data, and may also transmit feature data processed by an NPU at a collection end. The transmission interface may also transmit a media signal and another data signal, and the transmission interface may also transmit handshake and control signals.

In some embodiments, the transmission interface may be a unidirectional transmission interface, or may be a bidirectional transmission interface. For example, the transmission interfaces each are a unidirectional transmission interface. In this case, the transmit interface is disposed at a transmit end, and the receive interface is disposed at a receive end. This implements a function of transmitting media data by the transmit end to the receive end. For another example, the transmission interface may be a bidirectional transmission interface. In this case, the transmission interface has both a sending function and a receiving function, that is, supports bidirectional data transmission. For example, the transmission interface supports sending and receiving of a data signal, that is, the transmission interface may be used as a transmit end of the data signal, and may also be used as a receive end of the data signal.

In some embodiments, the transmission interface has a data aggregation transmission capability. For example, if a bandwidth permits, the interface protocol may support simultaneous transmission of media information and AI feature data on a same channel by using technologies such as data packaging and mixing.

In some embodiments, the transmission interface may transmit original or compressed media information. For example, the transmission interface may support bidirectional transmission of the media information and the AI feature data by configuring a plurality of channels.

Transmission interfaces in the first device 200 may include a first transmission interface and a third transmission interface. A processor in the first device is connected to the first transmission interface, data to be sent to the second device 300 is encapsulated into first bit stream data, and the first bit stream data is sent to a third transmission interface in the second device through the third transmission interface. Second bit stream data sent by the second device may be received through the third transmission interface, so that data or a message corresponding to the second bit stream data (the second bit stream data is data or a message encapsulated by the second device through a second transmission interface) is obtained through decapsulation through the first transmission interface.

Transmission interfaces in the second device 300 may include the second transmission interface and the third transmission interface. The second transmission interface is connected to a processor in the second device, data to be sent to the second device 300 is encapsulated into the second bit stream data through the second transmission interface, and the second bit stream data is sent to the third transmission interface in the first device through the third transmission interface. The first bit stream data from the first device may be received through the third transmission interface, and feature data, data, control information, feedback data, handshake data, a message, and the like that are sent by the first device are obtained through decapsulation through the second transmission interface. Therefore, a transmission channel established through the third transmission interface in the first device and the third transmission interface in the second device can support bidirectional transmission.

In some other embodiments, third transmission interfaces in a plurality of first devices 200 are one third transmission interface. In this case, a plurality of pieces of first bit stream data encapsulated through first transmission interfaces in the plurality of first devices may be uniformly sent to the third transmission interface in the second device 300 through the third transmission interface. For example, N first devices generate M pieces of first feature data, separately encapsulate the M pieces of first feature data through N first transmission interfaces in the N first devices, and pack M pieces of first feature data obtained after encapsulation, into a fourth message through the third transmission interface. The fourth message is received through the third transmission interface in the second device 300, the M pieces of first feature data are decapsulated through the second transmission interface, and the M pieces of first feature data are forwarded, based on a feature data processing model corresponding to the M pieces of first feature data, to the corresponding feature data processing model for processing.

It should be noted that the data signal herein may be multimedia data, or may be the feature data in this embodiment of this application, or may be control information for establishing a transmission link, or may be used to transmit another parameter and another data signal. This is not limited herein.

The following describes a specific transmission process of the transmission interface in this application by using examples.

In a possible implementation, a transmit end compresses and encrypts to-be-transmitted data; and transmits the to-be-transmitted data to the transmission interface through channel encoding, and then transmits the to-be-transmitted data to a physical layer channel of the interface after modulation.

For example, the first device is a transmit end that sends the feature data to the second device. The first device may further include a channel encoding unit, and perform, by using the channel encoding unit, channel encoding on the feature data according to a transmission interface or a data transmission protocol agreed on in a standard, to obtain a signal after encoding. Optionally, before performing channel encoding on the feature data, the first device may further perform data compression on the feature data, to further reduce a data transmission amount. Optionally, when performing channel encoding on the feature data, the first device may further encrypt the feature data obtained after channel encoding, modulate the feature data obtained after channel encoding into a physical layer signal according to an electrical layer protocol and a physical layer transmission protocol agreed on by a transmission interface system or a standard, and send the physical layer signal to the transmission channel through the output interface.

In a possible implementation, after the interface at the receive end demodulates the physical layer signal, channel decoding may be performed to obtain the transmitted data. Correspondingly, the receive end may further decompress and decrypt the signal after decoding.

For example, the second device is the receive end that receives the feature data sent by the first device. The second device may further include a channel decoding unit, configured to receive the feature data from the first device. For example, the physical layer signal may be received from the transmission channel through the input interface in the second device, and the physical layer signal is demodulated to obtain the signal after encoding. The channel decoding unit performs channel decoding on the received signal after encoding according to the transmission interface protocol, to obtain the feature data sent by the second device. Optionally, when the signal after encoding is a signal after encryption and/or compression, the channel decoding unit may further decrypt and decompress the signal after encoding.

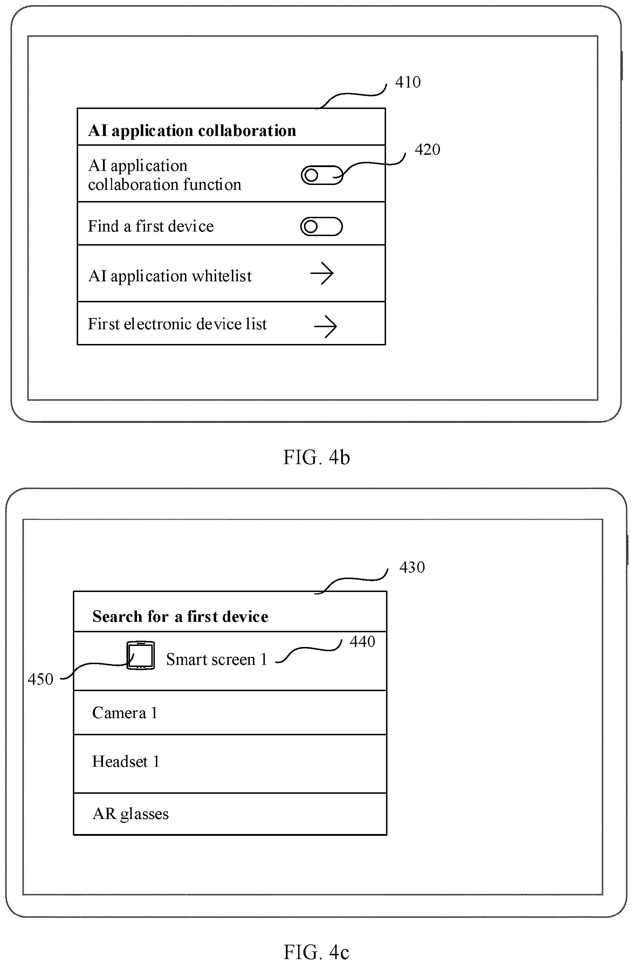

Optionally, the first device 200 or the second device 300 may further include a display, configured to display an image, a video, and the like. The display includes a display panel. The display panel may use a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a mini-LED, a micro-LED, a micro-OLED, quantum dot light emitting diodes (quantum dot light emitting diodes, QLEDs), or the like. In some embodiments, the first device 200 or the second device 300 may include one or S displays, where S is a positive integer greater than 1. The display may be configured to display information input by a user or information (for example, video information, voice information, image information, and text information) provided for the user, and various graphical user interfaces (graphical user interfaces, GUIs). For example, the display may display a photo, a video, a web page, or a file. Optionally, the display may display a graphical user interface shown in FIG. 4b. The graphical user interface shown in FIG. 4b may include a status bar, a hidden navigation bar, a time and weather widget (widget), and an application icon, for example, a browser icon. The status bar includes an operator name (for example, China Mobile), a mobile network (for example, 4G), time, and a battery level. The navigation bar includes an icon of a back (back) button, an icon of a home (home) button, and an icon of a forward button. In addition, it may be understood that, in some embodiments, the status bar may further include a Bluetooth icon, a Wi-Fi icon, an icon of an externally-connected device, and the like. It may be understood that in some other embodiments, the graphical user interface shown in FIG. 4b may further include a dock bar, and the dock bar may include a common application icon and the like. After the processor 210 detects a touch or gesture event of a user on an application icon by using a finger (a stylus or the like), in response to the touch or gesture event, the processor starts a user interface of an application corresponding to the application icon, and displays the user interface of the application on the display. For example, the display in the first device 200 or the second device 300 displays a home screen, and the home screen includes icons of a plurality of applications (such as a camera application and a WeChat application). The user taps an icon of the camera application on the home screen by using a touch sensor, to trigger the processor 210 to start the camera application and turn on a camera. The display displays an interface of the camera application, for example, a viewfinder interface. Optionally, the first device 200 or the second device 300 may generate a vibration prompt (for example, a vibration prompt for an incoming call) via a motor. An indicator in the first device 200 or the second device 300 may be an indicator light, and may be configured to indicate a charging status and a battery level change, or may be configured to indicate a message, a missed call, a notification, or the like.

Optionally, the first device 200 or the second device 300 may implement an audio function, for example, music playing and recording, by using an audio unit, an application processor, and the like. Optionally, the audio unit may include one or more of a speaker, a receiver, a microphone, and a headset jack. Optionally, the first device 200 or the second device 300 may receive button input, and generate button signal input related to user setting and function control of the first device 200 or the second device 300.

In this embodiment of this application, the display may be one integrated flexible display, or may be a spliced display including two rigid screens and one flexible screen located between the two rigid screens.

It should be understood that, in actual application, the first device 200 may include more or fewer components than those shown in FIG. 3a, and the second device 300 may include more or fewer components than those shown in FIG. 3b. This is not limited in this embodiment of this application. The first device 200 or the second device 300 shown in the figure is merely an example, and the first device 200 or the second device 300 may have more or fewer components than those shown in the figure, may combine two or more components, or may have different component configurations. Various components shown in the figure may be implemented in hardware that includes one or more signal processing and/or application-specific integrated circuits, software, or a combination of hardware and software.

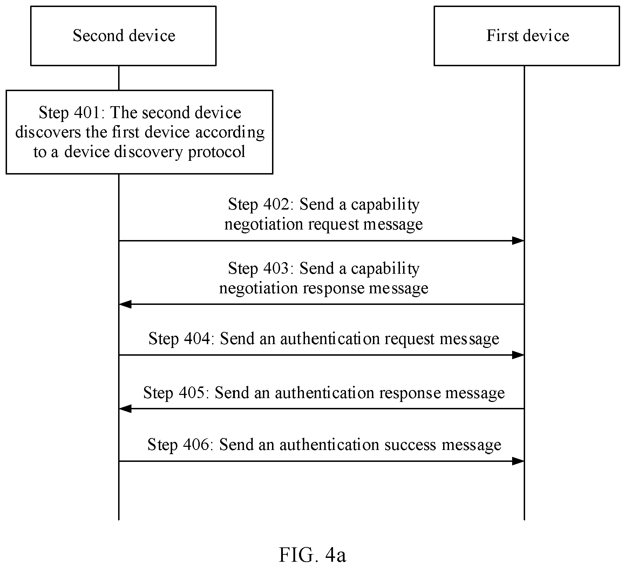

FIG. 4a is a schematic flowchart of a media information transmission method according to an embodiment of this application. A first device establishes a communication connection for AI application collaboration with a second device, and the first device and the second device cooperate with each other, so that the first device and the second device collaborate to complete an AI task. Descriptions are provided below by using an example in which the second device has a display and the second device initiates establishment of the communication connection of a distributed system for the AI application collaboration. In some embodiments, alternatively, the first device may actively initiate establishment of the communication connection with the second device. For implementation, refer to a manner in this embodiment. This is not limited herein. Specifically, the following may be included.

Step 401: The second device discovers the first device according to a device discovery protocol.

The first device and the second device may be connected to each other through respective transmission interfaces and corresponding wired or wireless channels. For example, a wireless communication connection may be established through Bluetooth, NFC, or Wi-Fi, or a communication connection may be established in a wired manner.

Step 402: The second device sends a capability negotiation request message to the first device.

The capability negotiation request message is used to request a transmission protocol supported by the first device, and the transmission protocol corresponding to the first device is used to indicate whether the first device supports transmission of feature data.

The second device may discover the first device according to the device discovery protocol adaptive in this embodiment of this application. Further, capability negotiation between the first device and the second device is performed through a control channel in a transmission interface according to a handshake protocol, so that the second device determines information such as a type of the first device, a software capability supporting AI processing, a hardware capability supporting AI processing, and a transmission protocol supporting media information. Therefore, whether the first device can establish the communication connection with the second device is determined, to implement a corresponding function of the AI application collaboration.

In some embodiments, establishment of the distributed system including the first device and the second device may be triggered by using a corresponding AI application, or establishment of the distributed system including the first device and the second device may be triggered in another manner, or establishment of the distributed system including the first device and the second device may be performed when a user actively initiates establishment of the communication connection between the first device and the second device. For example, a user may correspondingly set an AI application collaboration function of the first device or the second device through setting the first device or the second device having an interface corresponding to the AI application collaboration function. For example, the interface corresponding to the AI application collaboration function of the first device may be set on the first device, so that the user can set the AI application collaboration function of the first device in the interface. Alternatively, the interface corresponding to the AI application collaboration function of the second device may be set on the second device, so that the user can set the AI application collaboration function of the first device in the interface.

Considering that in some scenarios, the first device or the second device does not have a function of displaying an interface, in this case, a function of the AI application collaboration corresponding to the first device and the second device may be set on a device having a function of displaying an interface, that is, the first device and the second device are used as a whole to set the function of the AI application collaboration. For example, when the first device has the function of displaying the interface, the AI application collaboration function of the first device may be set, and the AI application collaboration function of the second device may also be set, so as to determine that the function of the AI application collaboration formed by the first device and the second device is set. This is not limited herein.

Descriptions are provided below by using a user-initiated triggering manner as an example.

For example, the second device may be provided with the interface corresponding to the AI application collaboration function. For example, FIG. 4b shows a control interface 410 corresponding to the AI application collaboration function of the second device. The user may perform an operation in the control interface 410, to set whether to establish the AI application collaboration function with the first device. For example, the user may enable/disable the AI application collaboration function based on an enabling/disabling control 420 corresponding to the AI application collaboration function.

The user enables the AI application collaboration function of the second device. An identifier of the first device discovered by the second device may be displayed in the interface corresponding to the AI application collaboration function of the second device. The identifier of the first device may include a device icon and/or a discovery name of the first device when the first device is used as a transmit end of feature data in the AI application collaboration.

In some embodiments, in response to a tap operation of the user, the second device displays a first device search interface 430. The first device search interface 430 may be a device search interface corresponding to an AI application collaboration service of the second device, and the device search interface 430 may include an identifier of a discoverable first device. Specifically, as shown in FIG. 4c, the device search interface includes the icon 450 and the discovery name 440 of the first device when the first device is used as the transmit end of the feature data in the AI application collaboration. In this way, it can be convenient for the user to distinguish the type of the device that is discovered by the second device and that is of the transmit end of the feature data in the AI application collaboration, for example, whether the device type of the transmit end of the feature data in the AI application collaboration is a split smart screen, a mobile phone accessory, a monitoring device, or a vehicle-mounted sensor device. As shown in FIG. 4c, the first device may be a smart screen 1, a camera 1, a headset 1, or AR glasses. In some other embodiments of this application, the discovered devices may not be distinguished in the first device search interface based on the type of device of the collaborative service end.

For example, in some other embodiments, the user may perform an operation on a prompt box in a notification bar or a taskbar of the second device, and the second device opens the first device search interface in response to the operation. In some other embodiments, the user may perform an operation on a related icon in a notification bar or a taskbar of the second device, and the second device opens the first device search interface in response to the operation. The second device may send the capability negotiation request to the first device in response to a selection operation of the first device.

The capability negotiation request may be a handshake request message sent to the first device through the control channel in the transmission interface of the second device according to the corresponding handshake protocol. The capability negotiation request is used to request capability information of the first device, such as a media information obtaining capability, a main parameter of the media information, an AI software and hardware processing capability, and a transmission protocol supported by a transmission interface.

Step 403: The first device sends a capability negotiation response message to the second device.

The capability negotiation response message may be used to confirm the transmission protocol supported by the first device for transmission of the feature data. Optionally, the capability negotiation response message may be used to confirm the capability information of the first device. For example, the capability negotiation response message further includes at least one of the following: a feature extraction capability of the first device or a version of a feature extraction model of the first device.

In some embodiments, after receiving the capability negotiation request message sent by the second device, the first device may return the capability negotiation response to the second device, where the capability negotiation response message may include the capability information such as the media information obtaining capability of the first device, the main parameter of the media information, the AI software and hardware processing capability, and the transmission protocol supported by the transmission interface.

In response to the capability negotiation response message from the first device, the first device may determine, based on the capability negotiation response message, whether the first device can form the distributed system by using respective transmission interfaces for the AI application collaboration (for example, collaboration of a first application), that is, whether the transmission interface of the first device and a transmission interface of the second device can support transmission of feature data of media information, whether the first device has an AI processing capability of performing feature extraction on the media information, and whether the first device supports a processing capability of an input part of the model corresponding to the AI application.

When it is determined that the first device supports the AI application collaboration, a capability negotiation acknowledgment message may be sent to the first device, where the capability negotiation acknowledgment message may be used to inform the first device that capability negotiation succeeds and whether to enable the AI application collaboration function.

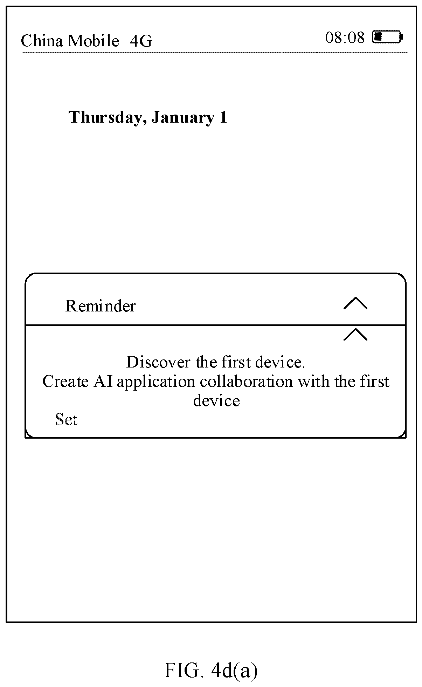

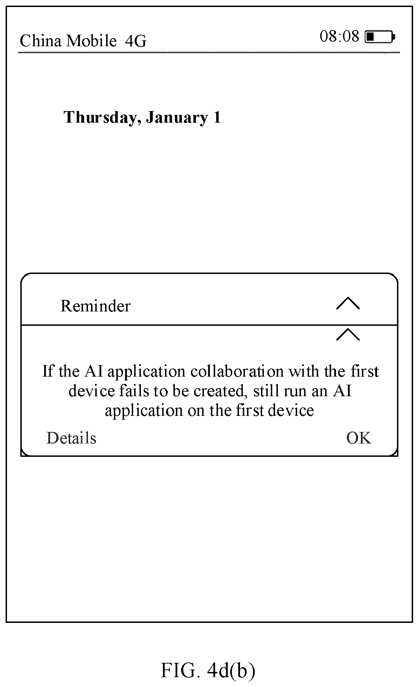

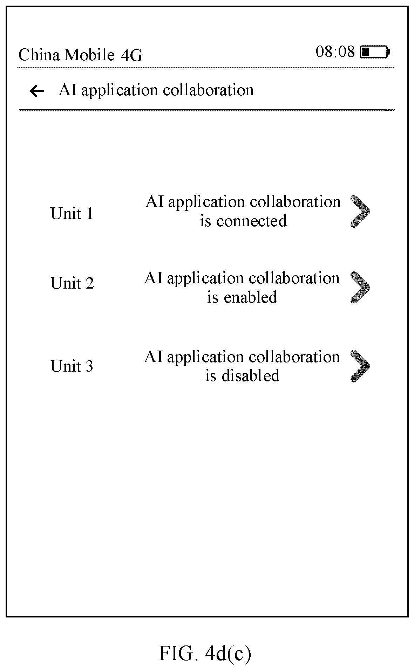

In some embodiments, when the AI application collaboration capability negotiation succeeds, the second device may further display a reminder message of the capability negotiation acknowledgment message, as shown in FIG. 4d(a), to inform the user whether to enable the function of the AI application collaboration of the first device and the second device. A "set" control may be disposed in an interface of the reminder message, and is used to jump to an AI application collaboration interface, so that the user can create the AI application collaboration with the first device.

In some embodiments, when the AI application collaboration capability negotiation fails (for example, NPU architectures of the first device and the second device are incompatible, and a same AI model cannot be supported), the second device may return a capability negotiation failure message to the first device. As shown in FIG. 4d(b) and FIG. 4d(c), a "Details" control may be disposed in an interface of a reminder message, and is used to jump to an AI application collaboration interface, so that the user can view a specific interface of an AI application collaboration capability negotiation failure result. In this case, whether to still transmit media information with the first device is determined based on the negotiation failure result, to implement the AI application function of the second device. In another possible manner, as shown in FIG. 4d(b), in the interface of the reminder message, the user may be informed whether to transmit media information with the first device, to implement the AI application function of the second device.

In a possible scenario, the first device and the second device may negotiate a media information transmission capability. A media information transmission manner simultaneously supported by the first device, the second device, and corresponding transmission interfaces is determined according to the corresponding handshake protocol. Therefore, the first device can establish a communication link for transmitting the media information with the second device. The first device can perform, based on the obtained media information and a media encoding scheme supported by the first device and the second device, media encoding and channel encoding on the media information, and send a signal of the media information after encoding to the second device. In this case, the second device performs decoding on the received signal of the media information to obtain the corresponding media information, and processes the media information according to a requirement of the AI application. When the media information needs to be displayed/played via the second device, the second device may display/play the media information. When a processing result of the media information needs to be displayed/played via the first device, the second device may perform media encoding and channel encoding on the processing result of the media information, to generate a signal of the media information that can be displayed/played via the first device. Therefore, the first device can receive the signal of the media information, and perform displaying/playing.

Step 404: The second device sends an authentication request message to the first device.

The authentication request message is used to request the first device to determine whether to establish a trusted communication connection with the data processing apparatus, and the communication connection is used to confirm permission that the data processing apparatus controls the first device.

In some embodiments, in response to an operation performed by the user on the AI application collaboration request in the first interface, the second device may send a security authentication request message to the first device, where the security authentication request message is used to request the second device to obtain control permission of a unit used for the AI application collaboration function, such as a media collection unit in the first device.

An authentication manner corresponding to a security authentication request may include manners such as manual authorization, unified biometric feature authentication and authorization, account authorization, cloud authorization, and near field communication authorization. Descriptions are provided by using an example of a manner in which the user inputs a user name and a password. In this case, the second device may display an authentication interface of the first device, where the authentication interface is used to prompt the user to input the user name and the password for logging in to and authenticating the first device. After the second device receives confirmation input from the user, the second device may include, in the security authentication request message, the user name and the password that are input by the user, and send the security authentication request message to the first device. The first device receives the security authentication request message from the second device through the transmission port, and performs validity verification on the user name and the password that are included in the security authentication request. After the validity verification performed by the first device on the second device succeeds, the first device may send a security authentication response message to the second device, where the security authentication response message is used to notify the second device whether the second device can obtain the control permission of the unit used for the AI application collaboration function, such as the media collection unit in the first device.

Step 405: The first device sends an authentication response message to the second device.

The authentication response message is used to confirm whether the first device establishes the trusted communication connection with the data processing apparatus.

Step 406: The second device may send an authentication success message to the first device.

It should be noted that the authentication success message is optional.

The authentication success message includes a device identifier of the first device, and an identifier of the distributed system in which the first device and the second device are located.

In some embodiments, the second device may allocate, in response to the security authentication response message from the first device, the identifier of the distributed system to the distributed system for the AI application collaboration formed by the first device and the second device. It may be considered that the first device and the second device form a super device or the distributed system. In the distributed system, the corresponding device identifier may be allocated to the first device and a corresponding device identifier may be allocated to the second device for data transmission in the distributed systems. The identifier of the distributed system may be used by the second device to establish a communication link with the first device. In addition, a corresponding media data link, a feature data transmission link obtained by using the model corresponding to the AI application, and a control link are established according to requirements. Therefore, the second device can receive, through the feature data transmission link, feature data sent by the first device, and perform processing on the feature data. Feature data obtained after processing may be used for the AI application. The second device can receive, through the media data link, media information sent by the first device. The second device can further send a control instruction to the first device through the control link, where the control instruction may be used to instruct to control units (the media information collection unit, a storage unit, a media information playing unit, and the like) in the first device, for example, in a control manner such as starting and ending of collecting media information by the media information collection unit, or adjusting, controlling, and operating a parameter of the media information collection unit. Through collaboration between the first device and the second device, the task of the corresponding AI application is implemented based on the media information collected by the first device.

When the security authentication fails, the first device cannot obtain the control permission of the unit required by the corresponding AI application collaboration of the first device, and may display, to the second device, a notification message indicating that the AI application collaboration between the second device and the first device fails to be established.

When the security authentication partially fails, for example, when authentication on the media collection unit in the first device succeeds, but authentication on the storage unit fails, the communication connection for the AI application collaboration may be established between the second device and the unit whose authentication succeeds. Further, a notification message indicating that the authentication performed by the second device on the media collection unit in the first device succeeds and the AI application collaboration is successfully established may be displayed in the AI application collaboration interface of the second device. For another example, authentication on an AI processing unit in the first device succeeds. In this case, the second device may establish the communication connection for the AI application collaboration with the AI processing unit in the first device. To be specific, the second device may configure device identifiers for the second device and the AI processing unit in the first device, to form the corresponding distributed system for the AI application collaboration. The device is used by the first device to establish a communication link of feature data with the second device, and may further establish a communication link of media information. The first device may send the feature data to the second device, so that the second device performs an operation by an output part of a model of the AI application based on the feature data sent by the first device, to obtain an inference result of the AI application. This implements the AI application collaboration between the first device and the second device.

In some embodiments, there may be a plurality of first devices and a plurality of second devices. One first device may initiate establishment of the communication connection for the AI application collaboration, or the plurality of devices may jointly initiate the capability negotiation request and the security authentication request to a server. In this case, the server may separately confirm the capability of establishing the AI application collaboration of the first device and the second device, and perform security authentication on the first device and the second device. After the capability negotiation and the authentication succeed, the server may configure the corresponding control permission of the first device for the second device, and configure the device identifier for the formed distributed system.

In the distributed system formed by the AI application collaboration, when there are a plurality of units such as media information collection units, storage units, and transmission interfaces in the plurality of first devices or the plurality of first devices used for the AI application collaboration, unit identifiers of the device identifiers may be allocated to different units. FIG. 4b(c) shows a display interface obtained after the second device successfully establishes the AI application collaboration with the first device. The display interface may display units that can establish the AI application collaboration with the second device, unit identifiers, and unit statuses (whether the AI application collaboration is enabled). In some other embodiments, the user may further actively set a unit that establishes the AI application collaboration with the second device. This is not limited in this application.

Therefore, feature data obtained after feature extraction is performed by input parts of respective models on media information collected by the plurality of first devices or media information collection units can be distinguished from sources of respective feature data based on respective unit identifiers. The feature data is aggregated through the transmission interface and then sent to the second device; and the second device can determine the respective feature data based on the respective unit identifiers, perform corresponding processing, and send, to the corresponding devices, control instructions carrying the respective unit identifiers, to implement the AI application collaboration of the plurality of devices. Therefore, the second device can control and manage the plurality of first devices or units in a unified manner.

In some other embodiments of this application, after the validity verification performed by the first device on the second device succeeds, the second device may further display the notification message, to notify the user that the second device has successfully established the connection with the first device, which may establish a transmission scenario in which media data in the first device is used for the AI application collaboration with the second device.

Further, in a process in which the first device establishes the communication connection with the second device, to avoid frequent operations performed by the user on the AI application collaboration function, in a possible implementation, the second device may preset a trigger condition for enabling the AI application collaboration function. For example, when the first device establishes the communication connection with the second device, and the second device enables the corresponding AI application, the second device automatically enables the AI application collaboration function. The AI application that triggers the AI application collaboration function herein may be determined by setting a whitelist. As shown in FIG. 4b, the whitelist may be set by the user in the AI application collaboration function interface, or may be set by default in a factory setting. This is not limited herein.

Correspondingly, the first device may also preset a trigger condition for enabling the AI application collaboration function. For example, after the first device establishes the communication connection with the second device, the first device automatically enables the AI application collaboration function.

In another possible implementation, considering that the communication connection is used to implement the AI application collaboration function, the user may set, in an AI application collaboration control interface of the second device, that a found first device is a first device that enables the AI application collaboration function. The second device establishes the communication connection only with the first device that enables the AI application collaboration function. This avoids establishing an unnecessary communication connection and wasting a network resource. For example, when determining that the first device enables the AI application collaboration function, the second device establishes the communication connection with the first device.

After establishing the communication connection for the AI application collaboration function with the second device, the first device may confirm, through the established communication connection, that the first device and the second device correspondingly load the input part and the output part of the AI algorithm model. The first device has a media information obtaining capability, and can load the input part of the AI algorithm model. The second device can load the output part of the AI algorithm model. Each first device and the second device may load input parts and output parts of one or more AI algorithm models.

To ensure that the input part and the output part of the AI algorithm model loaded by the first device and the second device can be used for the current AI application collaboration function, in a possible implementation, whether the first device and the second device respectively load the input part and the output part of the corresponding AI algorithm model may be determined, through capability negotiation between the first device and the second device, based on the AI algorithm model corresponding to the AI application.

In some embodiments, the second device may further query, by using the capability negotiation request message, the second device for a model ID and a version ID of the AI algorithm model loaded by the first device. Correspondingly, after receiving a capability negotiation request sent by the second device, the first device may return a capability negotiation response to the second device, where the capability negotiation response message may include the model ID and the version ID of the AI algorithm model loaded by the first device.

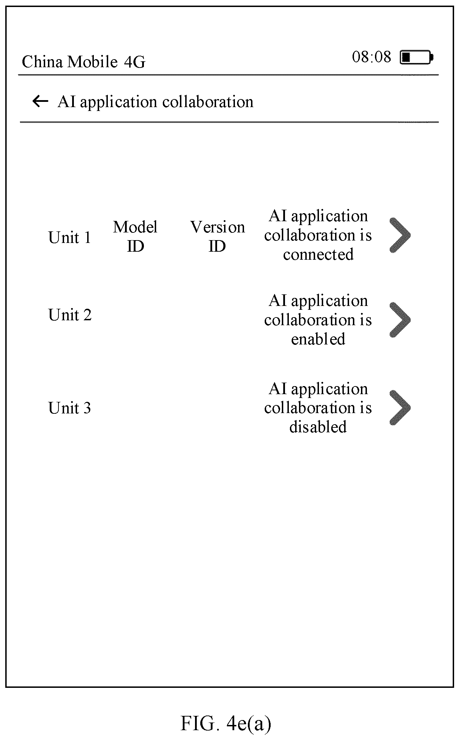

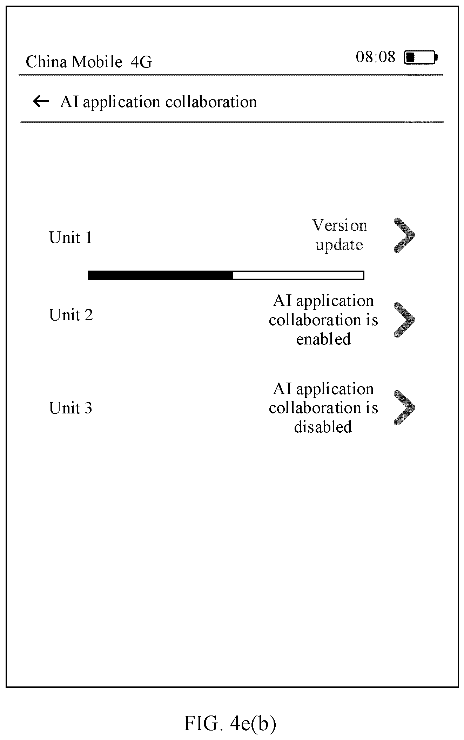

In some embodiments, the model ID and the version ID of the AI algorithm model and a loading status may be displayed in the AI application collaboration interface. For example, as shown in FIG. 4e(a), a unit 1 in the first device is configured to establish the AI application collaboration for the first application with the second device. In this case, a model ID and a version ID that correspond to the first application and that are loaded by the first device may be displayed in a display bar of the unit 1.

For example, the algorithm model is stored on the second device. Determining may be performed based on whether the model ID and the version ID corresponding to the input part of the AI algorithm model loaded by the first device are consistent with or compatible with a model ID and a version ID corresponding to the output part of the AI algorithm model loaded by the second device.

When determining that the model ID and the version ID corresponding to the input part of the AI algorithm model loaded by the first device are consistent with or compatible with the model ID and the version ID corresponding to the output part of the AI algorithm model loaded by the second device, the second device may confirm that establishment of the AI application collaboration between the first device and the second device is completed.

When the second device determines that the model ID and the version ID corresponding to the input part of the AI algorithm model loaded by the first device are inconsistent with or incompatible with the model ID and the version ID corresponding to the output part of the AI algorithm model loaded by the second device, the second device may determine that the version corresponding to the first device needs to be updated. In this case, the second device may display a loading failure interface on the display. Further, a prompt box may be displayed on the display, and the prompt box is used to prompt the user whether to update the model of the first device or the version of the model. In response to an instruction for updating the input part of the AI algorithm model, the second device may display an update interface on the display. For example, as shown in FIG. 4e(b), the unit 1 in the first device is configured to establish the AI application collaboration for the first application with the second device. In this case, a display bar corresponding to the unit 1 may display a message indicating that the model ID and the version ID that correspond to the first application and that are loaded by the first device need to be updated. In this case, the input part of the AI algorithm model whose model ID and version ID are consistent with or compatible with those of the output part of the AI algorithm model loaded by the second device may be sent to the first device, and the input part of the AI algorithm model is loaded to the first device. Optionally, as shown in FIG. 4e(b), an update progress or status may be displayed in the update interface displayed on the display. When it is confirmed that the input part of the AI algorithm model is loaded to the first device, establishment of the AI application collaboration between the first device and the second device may be confirmed.

The foregoing descriptions are provided by using an example in which the second device stores the input part and the output part of the AI algorithm model. Correspondingly, when the first device stores the input part and the output part of the AI algorithm model, refer to the foregoing embodiment, so that the first device and the second device correspondingly load the input part and the output part of the AI algorithm model. In addition, the input part and the output part of the AI algorithm model may also be stored in the server. In this case, the server may complete a process in which the first device and the second device correspondingly load the input part and the output part of the AI algorithm model. Details are not described herein again.

An input part and an output part of one AI application may be in a one-to-one correspondence, or a plurality of input parts may correspond to one output part, that is, an AI algorithm model includes a plurality of input parts and one output part. One input part corresponds to one first device, and one output part corresponds to one second device.

For example, in a scenario in which machine vision processing is performed on video information obtained by a plurality of cameras, in this case, the plurality of cameras may be used as the plurality of first devices, and a device that obtains a machine vision processing result is used as the second device. For another example, data information obtained by a multi-mode sensor such as a camera and a laser radar is used for an application such as environment understanding. In this case, the camera may be used as one first device, the laser radar is used as one first device, each sensor is used as one first device, and a device that obtains a processing result of the application such as environment understanding is used as the second device. In this case, a plurality of media signals from one or more first devices may be processed by using input parts of a plurality of AI algorithm models loaded to a plurality of different neural-network processing units. That is, each first device performs feature extraction on obtained media information, and sends feature data obtained after feature extraction to the second device, so that the second device can obtain feature data corresponding to media information from the sensors in the plurality of first devices.

In a possible implementation, the plurality of pieces of feature data obtained by the one or more first devices may be independently packaged and encapsulated, and are aggregated through the transmission interface for transmission together. In this case, the second device may perform recovery based on the received data packet to determine the feature data corresponding to the first devices, and synchronize the feature data corresponding to the first devices and then input the feature data obtained after synchronization to the output part of the AI algorithm model loaded to the neural-network processing unit in the second device for processing, so as to obtain the inference result for the subsequent AI application. This implements the collaborative AI task between the plurality of devices.

In another possible implementation, the one or more first devices may separately establish a communication link with the second device, so that each first device may separately send corresponding feature data to the second device. In this case, the second device may input the received feature data sent by the first devices to the output part of the AI algorithm model corresponding to the second device for processing, to obtain the inference result of the AI algorithm model, and implement the collaborative AI task between the plurality of devices.

### Example 1

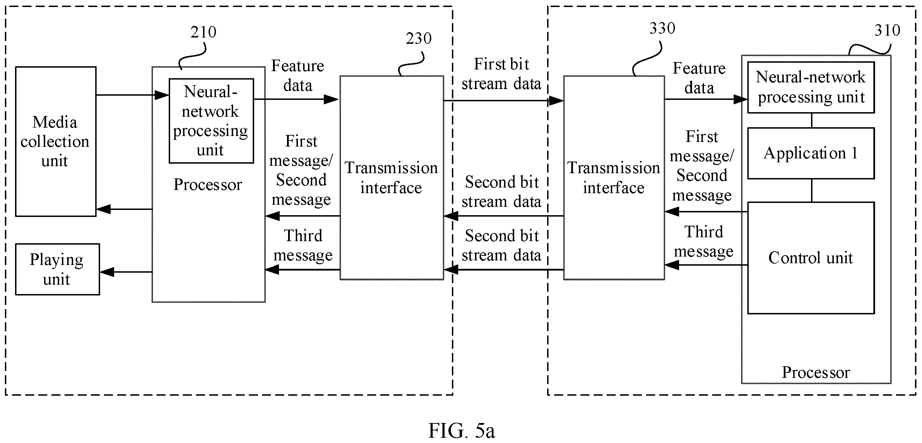

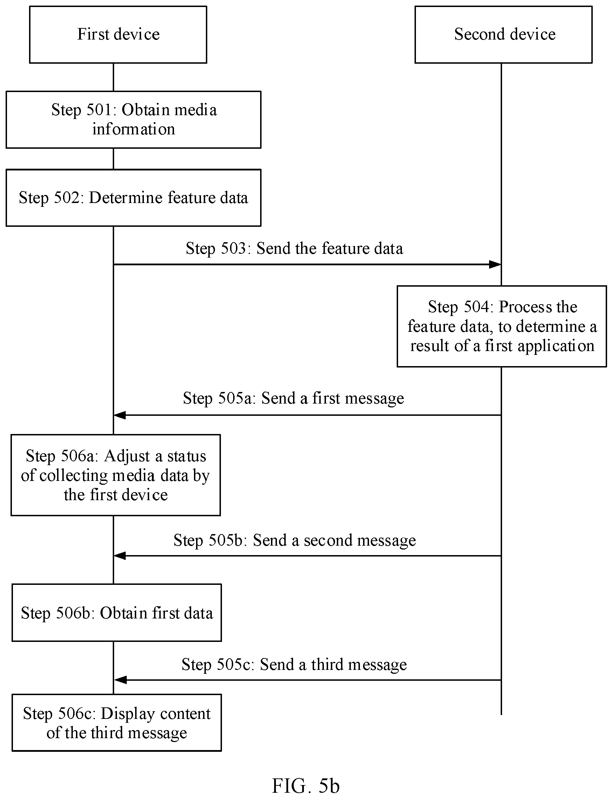

Example 1 may be used in scenarios such as a split television and split AR/VR. The first device may be a device such as a screen end of the split television or an AR/VR head-mounted display device. The second device may be a host box of the split television, a mobile phone, a PC, a game host, or the like. FIG. 5a is a schematic diagram of an architecture of a system in the example. The first device and the second device establish the communication connection for the AI application collaboration through corresponding transmission interfaces, to form the distributed system of the AI application collaboration. In this scenario, as shown in FIG. 5b, a procedure of a media information transmission method in this embodiment of this application may include the following steps.

Step 501: The first device obtains media information.

The first device may have audio and video collection, display, and playing capabilities and AI algorithm model processing hardware.

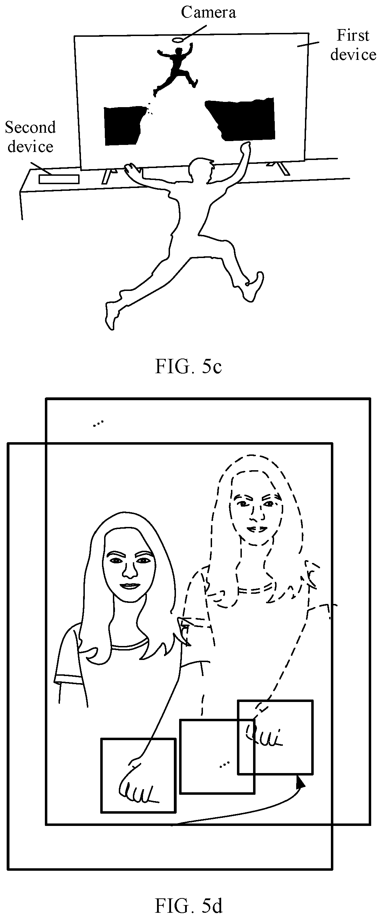

An original audio and video signal is collected by using an audio and video collection unit in the first device. After being preprocessed by a processing unit in the first device, the to-be-transmitted media information is obtained, and the to-be-transmitted media information is transmitted to an NPU in the first device. For example, as shown in FIG. 5c, the first device is the screen end of the split television, and a plurality of video image frames of a person collected by a camera in the first device are used as the to-be-transmitted media information.

Step 502: The first device performs feature extraction on the media information by using an input part (for example, a first feature extraction model) of an AI algorithm model, to determine feature data.

The first device determines, based on a currently determined AI application (for example, an application 1) for collaborative processing, that the input part of the AI algorithm model of the first application is loaded to the NPU in the first device, so that the input part of the AI algorithm model of the first application in the NPU in the first device performs feature extraction on the media information, to obtain the feature data. For example, the first application is an application related to machine vision interaction. For example, as shown in FIG. 5d, the AI algorithm model corresponding to the first application may be an AI algorithm model used to recognize a gesture of a person. In this case, the input part of the AI model for gesture recognition performs feature extraction on the plurality of video image frames of the person that are collected by the camera in the first device, to determine the feature data on which feature extraction is performed.

Step 503: The first device sends the feature data to the second device.

The feature data is transmitted to an NPU in the second device. The second device has a media information processing and control capability, for example, has AI algorithm model processing hardware and a media information processing capability and a man-machine interaction capability.

Step 504: The second device processes the feature data by using an output part (for example, a first feature data processing model) of the AI algorithm model.

The second device may obtain an inference result of the AI algorithm model by using the output part of the AI algorithm model for processing. The inference result of the AI algorithm model is provided for the subsequent AI application to obtain a subsequent processing result of the task of the AI application such as voice interaction, machine vision interaction, or environment modeling.

In some embodiments, the processing result, of the AI application, obtained by the second device needs to be displayed in a display interface of the first device. For example, as shown in FIG. 5d, the plurality of video image frames of the person collected by the first device are used as the to-be-transmitted media information. In this case, the output part of the AI model for gesture recognition may process the obtained feature data, to recognize a gesture in a video image of the person collected by the first device. The gesture obtained through recognition may be used as the processing result of the AI application by generating a recognition box at a corresponding position of the image. In this case, the processing result of the AI application may be displayed on a display of the first device. Therefore, the second device can send, to the first device, a control instruction corresponding to the gesture recognition result, to instruct the first device to display the gesture recognition result at a corresponding position on the display, so that the user can determine, based on the displayed gesture recognition result, that gesture recognition succeeds.

Optionally, step 505a: The second device sends a first message to the first device.

The first message is used to indicate a status of collecting media data by the first device, and the status of collecting the media data by the first device includes at least one of the following: an enabled state, a disabled state, or collecting a parameter of the media data.

Step 506a: Adjust, in response to the first message, the status of collecting the media data by the first device.

In some other embodiments, when the second device has control permission of the camera in the first device, the second device may further determine, based on the gesture recognition result, whether parameter setting of the camera in the first device is appropriate. When determining that the parameter setting of the camera in the first device needs to be adjusted, the second device may generate a corresponding control instruction, where the control instruction is used to adjust a parameter of the camera in the first device (for example, a pose of the camera in the first device, a focal length, or a focus location of the camera, and a type of the enabled camera). In a process of enabling the user to use the machine vision application, it is ensured that the camera in the first device can correspondingly adjust the parameter of the camera as a gesture, a posture, or a position of the user changes, so as to implement real-time tracking and recognition of the gesture.

Optionally, step 505b: The second device sends a second message to the first device.

In some embodiments, the second message is used to indicate the first device to obtain first data.

Step 506b: The first device obtains the first data.

In response to the second message, the first device may obtain the first data through a network or by using the storage unit in the first device, or collect the first data by a media information collection unit in the first device. Therefore, the first device can send the first data to the second device, where the first data may be media data collected by the first device, data stored in the first device, or data received by the first device.

For another example, when the second device needs to control the media information collection unit in the first device to adjust a parameter of the media information collection unit, the second device may first send the second message to the first device, where the second message may be used to request to obtain the parameter of the media information collection unit in the first device.

In some other embodiments, the second device may control, based on the inference result of the AI application, the first device to collect the media information. In this case, the second message may be used to indicate the first device to collect feature data of third media data. For example, the second device determines, based on the inference result of the AI application, that audio information further needs to be collected by the first device. In this case, the second message may be used to indicate the first device to collect the corresponding audio information. Optionally, the second message may further indicate a model ID and a version ID corresponding to performing feature extraction on the audio information after the audio information is collected. In this case, in response to the second message, the first device collects the third media data, performs feature extraction on the third media data by using the feature extraction model corresponding to the model ID and the version ID to obtain third feature data, and sends the third feature data to the second device. Therefore, after receiving the third feature data, the second device processes the third feature data by using the feature data processing model corresponding to the model ID and the version ID, to obtain an inference result of the AI application corresponding to the audio information. This can better implement the task of the AI application.

In some embodiments, the second device may further generate, based on received operation information of the user and/or the received processing result of the AI model, a third message to be sent to the first device.

For example, the user may perform an operation in an interface of the AI application (for example, the application 1). The operation may be a tap operation, or may be a gesture operation, or may be a voice instruction operation. This is not limited herein. The second device may receive an operation instruction, of the user in the interface of the AI application, collected by the first device, and generate the third message to the first device based on the operation instruction and the processing result of the AI model.

Optionally, step 505c: The second device sends the third message to the first device.

The third message is determined by the second device based on first feature data, and the third message is used to indicate content to be displayed by the first device.

Step 506c: In response to the third message, the first device displays, by using a display unit, the content in the third message used to indicate the first device to display.

For example, when the gesture operation instruction of the user is starting the corresponding AI application, the second device determines, by recognizing the gesture, that the gesture operation instruction is starting the corresponding AI application. In this case, the second device starts the AI application according to the operation instruction, and sends, to the first device, media information required for displaying the interface of starting the AI application. In this case, after receiving the media information, the first device may display the interface of starting the AI application on a display in the first device.

For another example, the operation instruction of the user is jumping to a video interface corresponding to the operation and displaying a corresponding video. In this case, the second device obtains media information of the corresponding video according to the recognized operation instruction of the user, sends the media information to the first device through the transmission interface, and displays and plays on a display in the first device. This makes response to the operation instruction of the user and completes man-machine interaction.

### Example 2

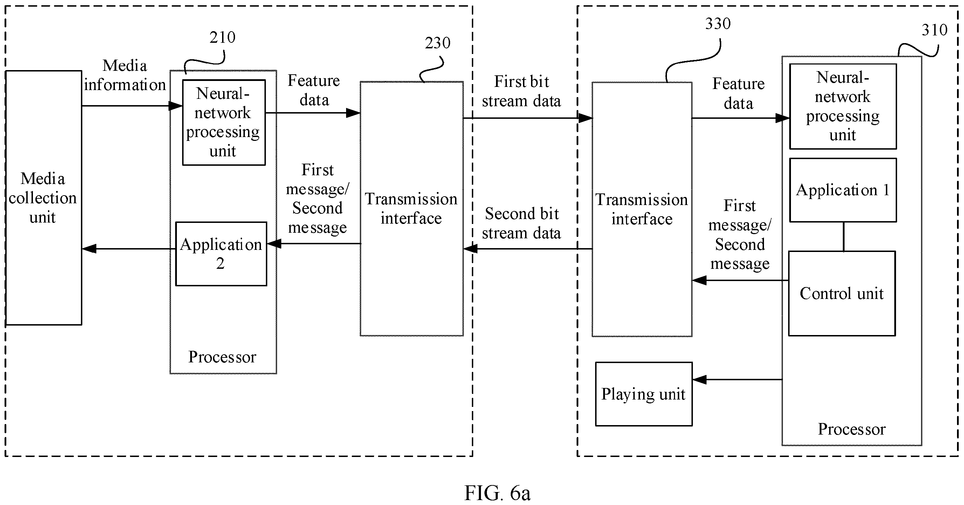

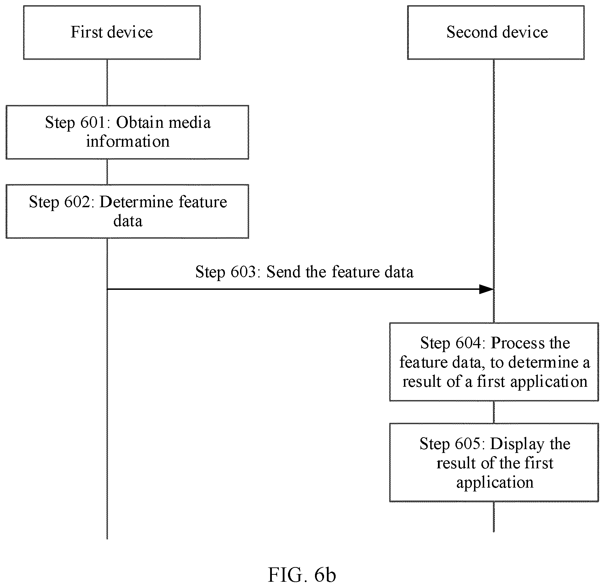

FIG. 6a is a schematic diagram of an architecture of a system in Example 2. The second device has a display. In this case, the first device may be a terminal device such as an external camera accessory, a vehicle-mounted camera, a home surveillance camera, a smart home appliance having a video collection capability, a screen end of a split television, or an AR/VR head-mounted display. The second device may be a terminal device having strong computing display, such as a host box of a split television, a mobile phone, a vehicle-mounted host, a PC, or a game host. The first device and the second device establish the communication connection for the AI application collaboration through corresponding transmission interfaces, to form the distributed system of the AI application collaboration. In this scenario, as shown in FIG. 6b, a procedure of a media information transmission method in this embodiment of this application may include the following steps.

Step 601: The first device obtains media information.

The first device may have an audio and video collection capability and AI algorithm model processing hardware.

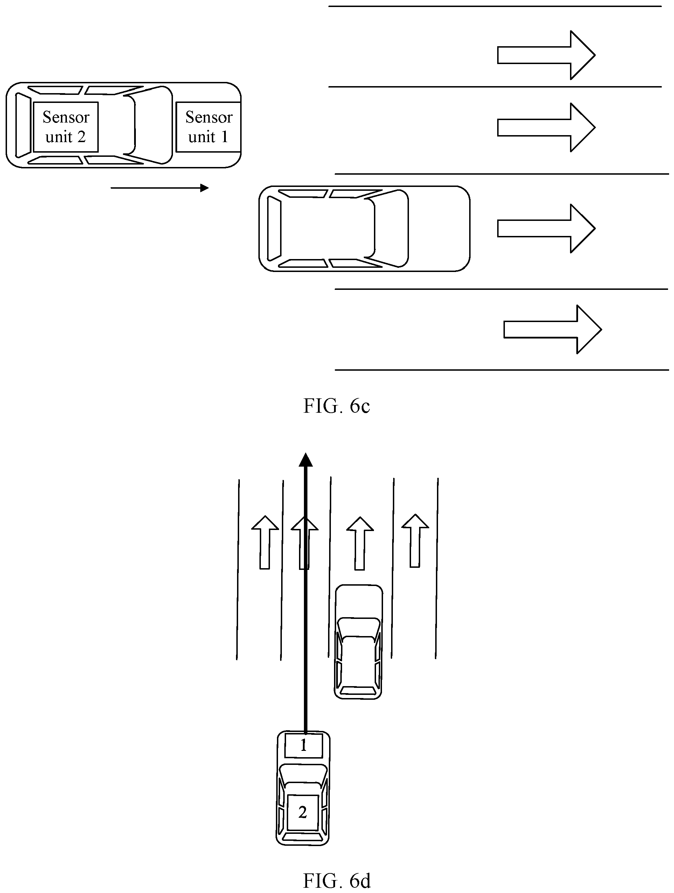

An original audio and video signal is collected by using an audio and video collection unit in the first device. After being preprocessed by a processing unit in the first device, the to-be-transmitted media information is obtained, and the to-be-transmitted media information is transmitted to an NPU in the first device. For example, as shown in FIG. 6c, the first device is a sensor unit in a vehicle-mounted device. Video images that are of a road and outside a vehicle in a running process of the vehicle and that are collected by a camera in the first device are used as the to-be-transmitted media information.

Step 602: The first device performs feature extraction on the media information by using an input part (for example, a first feature extraction model) of an AI algorithm model, to determine feature data.

The input part of the AI algorithm model is loaded to the NPU in the first device, so that feature extraction is performed on the media information by using the input part of the AI algorithm model in the NPU, to obtain the feature data. For example, an AI application is an application related to autonomous driving. In this case, the AI algorithm model corresponding to the AI application may be an AI algorithm model used to recognize an environment such as a lane or a road condition in which the vehicle travels. In this case, the input part of the AI model for road recognition performs feature extraction on an image of a lane collected by a sensor (for example, a radar sensor or the camera) in the first device, to determine the feature data obtained after feature extraction is performed. For example, as shown in FIG. 6c, a media information collection unit, in the first device, used for the AI application collaboration may be a sensor unit 1 (for example, the radar sensor). In this case, the first feature extraction model corresponding to the sensor unit 1 performs feature extraction on the media information collected by the sensor unit 1, to obtain the feature data 1.

Step 603: The first device sends the feature data to the second device.

The feature data is transmitted to an NPU in the second device. The second device has a media information processing and control capability, for example, has AI algorithm model processing hardware, a media information processing capability, a man-machine interaction capability, and a display capability.

Step 604: The second device processes the feature data by using an output part (for example, a first feature data processing model) of the AI algorithm model.

The second device may obtain an inference result of the AI algorithm model by using the output part of the AI algorithm model for processing. The inference result of the AI algorithm model is provided for the subsequent AI application to obtain a subsequent processing result of the task of the AI application such as voice interaction, machine vision interaction, or environment modeling.

With reference to the foregoing example, in step 604, the feature data 1 obtained after feature extraction is performed on a point cloud image of a lane collected by the radar sensor in the first device is input to the output part of the AI algorithm model, for corresponding lane recognition, for processing, to obtain lane information in the image (as shown in FIG. 6c, it may be determined that the vehicle is about to travel into a second lane from left to right). Therefore, the second device can be provided with more accurate positioning information of the first device (that is, a lane in which the vehicle is located), and can provide an application such as a better navigation path for the first device based on the positioning information of the first device.

In some other embodiments, the first device may be a plurality of types of media information collection devices, and is configured to provide more media information for the AI application, so as to obtain the better result of the AI algorithm. For still another example, the first device is a plurality of types of sensors in the vehicle. For example, in different weather conditions, a large error may occur when a current road is recognized by only a single sensor. In this case, comprehensive recognition may be performed on media information collected by the plurality of types of sensors, to obtain a better road recognition effect.

For example, the collected media information may be one video/image signal, or may be a combination of a plurality of video/image signals. Each video/image signal may be a visible light image, or may be a video/image signal of another mode such as an infrared image, a radar signal, or depth information. In this case, the plurality of media information collection units in one or more first devices may be processed by using input parts of a plurality of Al algorithm models loaded by a plurality of different NPUs, to extract the corresponding feature data. For example, as shown in FIG. 6c, media information collection units in the first device that are used for the AI application collaboration may include the sensor unit 1 (for example, the radar sensor) and a sensor unit 2 (for example, the camera). In this case, the first feature extraction model corresponding to the sensor unit 1 performs feature extraction on the media information collected by the sensor unit 1, to obtain the feature data 1. The first feature extraction model corresponding to the sensor unit 2 performs feature extraction on media information obtained by the sensor in the sensor unit 2, to obtain feature data 2. Therefore, a plurality of pieces of feature data output by the NPUs may be independently packaged and encapsulated, aggregated through the transmission interface, and then uniformly transmitted to the second device. The second device inputs, based on the received feature data 1 and feature data 2, each piece of feature data 1 and each piece of feature data 2 to the output parts of the AI algorithm model for processing, or inputs each piece of feature data 1 and each piece of feature data 2 to the AI algorithm model that performs fusion processing on the feature data 1 and the feature data 2, to obtain a better recognition effect.

Step 605: Display the processing result of the AI application on the second device.

In some embodiments, the processing result of the AI application may be displayed on the second device. For example, as shown in FIG. 6d, the lane in which the vehicle is currently located, the navigation path planned for the user based on the lane in which the vehicle is located, and the like may be displayed on the display in the second device. The media information collection units in the first device that are used for the AI application collaboration may include the sensor unit 1 (marked as 1 in the figure) and the sensor unit 2 (marked as 2 in the figure).

A control instruction to the first device may also be generated based on the processing result of a task of the AI application. For a specific manner, refer to the implementation in FIG. 5b. Details are not described herein again.

The first device and the second device are connected through the transmission interfaces to form the distributed system for the AI application collaboration, and combine an information sensing capability and a lightweight AI processing capability of the first device with more powerful computing hardware, an AI processing capability, and an interaction capability of the second device, to collaboratively complete the task of the AI application such as voice interaction, visual interaction, or environment modeling.

### Example 3

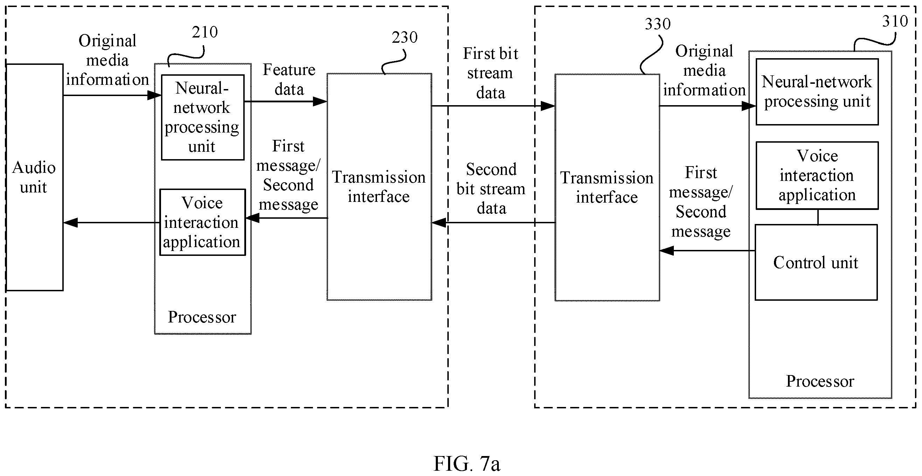

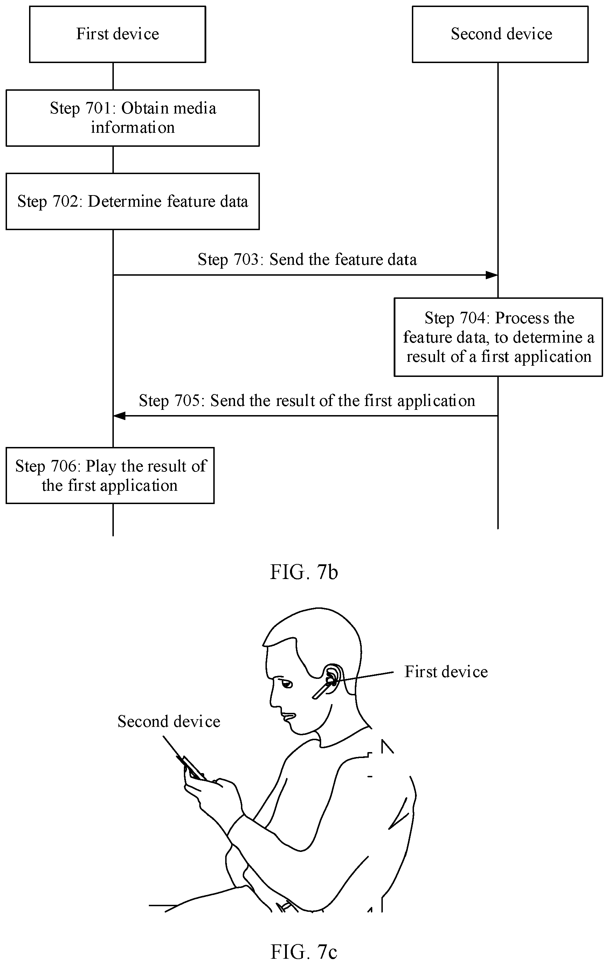

As shown in FIG. 7a, the first device and the second device may form a distributed voice interaction system for the AI application collaboration. The first device may have an audio information collection capability and AI algorithm model processing hardware, for example, a smart headset, a smart speaker, an AR/VR head-mounted display, a vehicle-mounted audio collection device, and a smart home appliance having an audio collection capability. The second device may be a terminal device having strong computing, such as a mobile phone, a smart television, or a vehicle-mounted host. Optionally, the second device may further have a display function. It is considered that an audio signal is mainly transmitted in this example. Therefore, the transmission interface corresponding to the AI application collaboration may be a wireless transmission system such as Wi-Fi or Bluetooth, or may be an electrical signal transmitted in a wired manner, an optical signal transmitted in an optical fiber, or the like. FIG. 7b is a schematic flowchart of a media information transmission method according to this application. The method specifically includes the following steps.

Step 701: The first device obtains media information.

The first device may have an audio collection capability and AI algorithm model processing hardware.

The original audio signal is collected by using an audio unit in the first device. After being preprocessed by a processing unit in the first device, the to-be-transmitted media information is obtained, and the to-be-transmitted media information is transmitted to an NPU in the first device. For example, as shown in FIG. 7c, the first device is a smart headset, the AI application collaboration (for example, an AI application such as noise reduction or voice interaction) is established between a microphone unit in the first device and the second device, and the media information such as a voice input by a user or environmental noise is collected by the microphone in the first device.

Step 702: The first device performs feature extraction on the media information by using an input part (for example, a first feature extraction model) of an AI algorithm model, to determine feature data.

The input part of the AI algorithm model is loaded to the NPU in the first device, so that feature extraction is performed on the media information by using the input part of the AI algorithm model in the NPU, to obtain the feature data. For example, the AI application is an application related to voice recognition interaction. In this case, the AI algorithm model corresponding to the AI application may be an AI algorithm model for voice recognition. In this case, the input part of the AI model for voice recognition may perform feature extraction on the audio information collected by the microphone in the first device, to determine the feature data after feature extraction is performed. For another example, the AI application is an application related to automatic noise reduction. In this case, the AI algorithm model corresponding to the AI application may be an AI algorithm model for environmental noise recognition. In this case, the input part of the AI model for noise recognition may perform feature extraction on the audio information collected by the microphone in the first device, to determine the feature data after feature extraction is performed.

Step 703: The first device sends the feature data to the second device.

The feature data is transmitted to an NPU in the second device. The second device has a media information processing and control capability, for example, has AI algorithm model processing hardware, a media information processing capability, a man-machine interaction capability, and a display capability.

Step 704: The second device processes the feature data by using an output part (for example, a first feature data processing model) of the AI algorithm model, to determine a result of the first application.

Optionally, step 705: The second device sends the result of the first application to the first device.

Step 706: The first device plays the result of the first application.

The second device may obtain an inference result of the AI algorithm model by using the output part of the AI algorithm model for processing. The inference result of the AI algorithm model is provided for the subsequent AI application to obtain the processing result of the task of the subsequent voice interaction such as speech recognition, natural language processing, or voiceprint recognition.

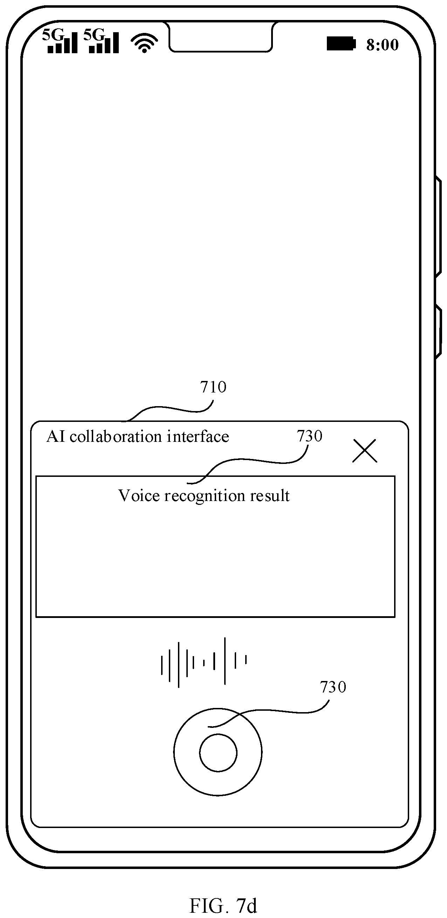

With reference to the foregoing example, the voice recognition result collected by the first device may be determined based on processing on the feature data. For example, the voice recognition result is searching for a specified video. In this case, as shown in FIG. 7d, the second device may display the voice recognition result in a display interface of the second device, and search for the corresponding video based on the voice recognition result. Further, the second device may further display the found video in the AI collaboration interface or jump to a corresponding video playing application to display the found video, so as to complete the task of the AI application for speech recognition interaction.

With reference to the foregoing example, a noise recognition result collected by the first device may be determined based on processing on the feature data, and corresponding noise reduction audio information is generated based on the noise recognition result, and the noise reduction audio information is sent to the first device through the transmission interface, so that when the microphone in the first device performs recording or the audio/video playing unit performs audio playing, noise reduction is performed based on the noise reduction audio information when the first device plays recording or audio playing.

The audio information obtained by the first device may not be transmitted to the second device, but is converted into the abstract feature data by using the input part of the AI algorithm model and then transmitted. After the feature data is processed by using the model, obvious information loss exists and audio and video information that can be directly understood by a person cannot be recovered, which improves a privacy protection capability. The data amount of the feature data is lower than that of the original audio and video information, so that the feature data can be transmitted in real time even when a channel bandwidth is small. This eliminates an extra compression and encoding process, reduces system power consumption and a delay, reduces costs, and improves product competitiveness.

An audio sensing capability and a lightweight AI processing capability at a transmit end are combined with more powerful computing hardware and an AI processing capability of the second device, to collaboratively complete the task of voice interaction such as voice recognition, natural voice processing, and voiceprint recognition. The interface does not need to support bidirectional transmission of the video information, requires low bandwidth, and is more appropriate for short-distance wireless transmission.

The implementations of this application may be randomly combined to achieve different technical effects.

In the foregoing embodiments provided in this application, the method provided in embodiments of this application is described from a perspective in which the first device and the second device serve as execution bodies. To implement the functions in the method provided in the foregoing embodiments of this application, the electronic device may include a hardware structure and/or a software module, to implement the functions in a form of the hardware structure, the software module, or a combination of the hardware structure and the software module. Whether a function in the foregoing functions is performed by using the hardware structure, the software module, or the combination of the hardware structure and the software module depends on particular applications and design constraints of the technical solutions.

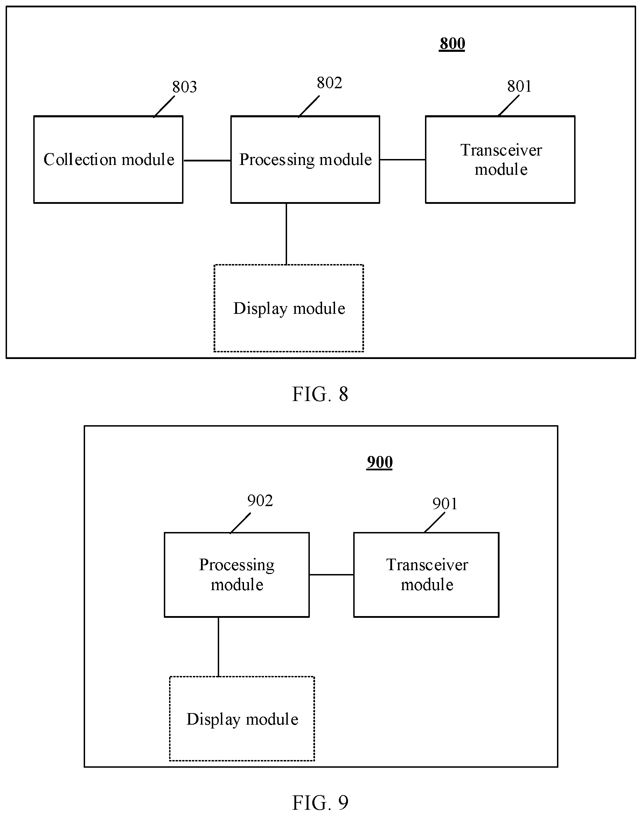

Based on a same concept, FIG. 8 shows an electronic device 800 according to this application. The electronic device includes a transceiver module 801, a collection module 803, and a processing module 802. Optionally, the electronic device 800 may further include a display module. For example, the electronic device 800 may be the first device in embodiments of this application. In this case, the transceiver module 801 includes a first transmission interface.

The collection module 803 is configured to collect first media information.

The processing module 802 is configured to: perform feature extraction on the first media information, to determine first feature data corresponding to the first media information; and send the first feature data to a second device through the first transmission interface, where the first feature data is used by the second device to obtain a result of a first application.

In a possible implementation, the transceiver module 801 is configured to: receive, through the first transmission interface, a capability negotiation request message sent by the second device, where the capability negotiation request message is used to request a transmission protocol supported by the first device and a feature extraction capability of the first device, the transmission protocol corresponding to the first device is used to indicate that the first device supports transmission of feature data, and the feature extraction capability of the first device is used to indicate that the first device supports extraction of the first feature data corresponding to the first media information; and send a capability negotiation response message to the second device through the first transmission interface, where the capability negotiation response message is used to confirm the transmission protocol supported by the first device for transmission of the feature data and the feature extraction capability of the first device.

In a possible implementation, the processing module 802 is configured to send a first notification message to the second device by using the transceiver module 801 in response to a first operation on the first application, where the first device is an electronic device that establishes a communication connection with the second device, and the first notification message is used to request the first device to establish first application collaboration with the second device. The transceiver module 801 is configured to receive a first response message returned by the second device, where the first response message is used to confirm that the first device and the second device enable the first application collaboration.

In a possible implementation, the transceiver module 801 is configured to receive a first notification message sent by the second device, where the first device is an electronic device that establishes a communication connection with the second device, and the first notification message is used to request the first device to establish first application collaboration with the second device. The processing module 802 is configured to send, by using the transceiver module 801, a first response message to the second device in response to a third operation on the first application, where the first response message is used to confirm that the first device and the second device enable first application collaboration.

In a possible implementation, the transceiver module 801 is configured to: send, through the first transmission interface, a capability negotiation request message to the second device, where the capability negotiation request message is used to request a transmission protocol supported by the second device and a feature data processing capability of the second device, the transmission protocol corresponding to the second device is used to indicate that the second device supports transmission of feature data, and the feature data processing capability of the second device is used to indicate a capability that the second device supports processing of the first feature data to obtain the result of the first application; and receive a capability negotiation response message from the second device through the first transmission interface, where the capability negotiation response message is used to confirm the transmission protocol supported by the second device for transmission of the feature data and the feature data processing capability of the second device.

In a possible implementation, the processing module 802 is configured to: obtain a first feature extraction model by using the transceiver module 801, where the first feature extraction model is used to perform feature extraction on the first media information, a version of the first feature extraction model corresponds to a version of a first feature data processing model, and the first feature data processing model is used by the second device to process the first feature data to obtain the result of the first application.

In a possible implementation, the capability negotiation response message further includes: a version of a feature extraction model in the first device; or a version of a feature data processing model in the second device.

In a possible implementation, the transceiver module 801 is configured to: receive the first feature extraction model from the second device through the first transmission interface, or receive the first feature extraction model from a server, or read the first feature extraction model stored in the first device.

In a possible implementation, the transceiver module 801 is configured to send the first feature data processing model to the second device through the first transmission interface, where a version of a first feature extraction model corresponds to a version of the first feature data processing model, and the first feature data processing model is used by the second device to process the first feature data to obtain the result of the first application.

In a possible implementation, the processing module 802 is configured to obtain a second feature extraction model by using the transceiver module 801, where a version of the second feature extraction model corresponds to a version of a second feature data processing model, and the second feature extraction model and the second feature data processing model are determined after the first feature extraction model and the second feature data processing model are updated.

In a possible implementation, the processing module 802 is configured to perform feature extraction on a training sample by using the first feature extraction model, to generate first training feature data. The transceiver module 801 is configured to send the first training feature data to the second device through the first transmission interface, where the first training feature data is used to train the first feature extraction model and the first feature data processing model.

In a possible implementation, the transceiver module 801 is configured to: receive feedback data from the second device through the first transmission interface, where the feedback data is determined by the second device after training based on the first training feature data, and the feedback data is used by the first device to train the first feature extraction model.

In a possible implementation, the transceiver module 801 is configured to: receive a first message from the second device through the first transmission interface, where the first message is used to indicate a status of collecting media information by the first device; and adjust, in response to the first message, the status of collecting the media information by the first device.

In a possible implementation, the status of collecting the media information by the first device includes at least one of the following: an enabled state, a disabled state, or collecting a parameter of the media information.

In a possible implementation, the transceiver module 801 is configured to receive a second message from the second device through the first transmission interface, where the second message is used to indicate the first device to obtain first data. The processing module 802 is configured to: in response to the second message, obtain the first data, or collect the first data; and send the first data to the second device, where the first data is one of the following: media information collected by the first device, a parameter of the first device, data stored in the first device, and data received by the first device.

In a possible implementation, the transceiver module 801 is configured to send the first data to the second device through the first transmission interface.

In a possible implementation, the transceiver module 801 is configured to: receive a second message from the second device through the first transmission interface, where the second message is used to indicate the first device to collect feature data corresponding to third media information; collect the third media information in response to the second message; perform feature extraction on the third media information, to obtain third feature data; and send the third feature data to the second device through the first transmission interface.

In a possible implementation, the second message or the first message is determined by the second device based on the first feature data.

In a possible implementation, the transceiver module 801 is configured to receive a third message from the second device through the first transmission interface, where the third message is determined by the second device based on the first feature data, and the third message is used to indicate content to be displayed by the first device. The processing module 802 is configured to display, by using a display module in response to the third message, the content indicated by the third message and to be displayed by the first device.

In a possible implementation, the transceiver module 801 is configured to: receive, through the first transmission interface, an authentication request message sent by the second device, where the authentication request message is used to request the first device to determine whether to establish a communication connection with the second device, and the communication connection is used to confirm permission that the second device controls the first device; and send an authentication response message to the second device through the first transmission interface, where the authentication response message is used to confirm permission that the second device controls the first device.

In a possible implementation, the transceiver module 801 is configured to receive, through the first transmission interface, an authentication success message sent by the second device, where the authentication success message includes a device identifier corresponding to the first device, and an identifier of a distributed system in which the first device and the second device are located.

In a possible implementation, the electronic device 800 may further include a first module, and the authentication success message further includes at least one of the following: an identifier of the first module in the first device and an identifier of the first module in the distributed system.

In a possible implementation, the transceiver module 801 may further include a third transmission interface, the first device establishes a channel connection with the second device through the third transmission interface, and feature data or a message sent by the first device is sent through the third transmission interface after being encapsulated into first bit stream data through the first transmission interface.

In a possible implementation, the first device establishes the channel connection with the second device through the third transmission interface, and a message received by the first device is obtained after second bit stream data received through the third transmission interface is decapsulated through the first transmission interface.

Based on a same concept, FIG. 9 shows an electronic device 900 according to this application. The electronic device includes a transceiver module 901 and a processing module 902. Optionally, the electronic device 900 may further include a display module. For example, the electronic device 900 may be the second device in embodiments of this application. In this case, the transceiver module 901 includes a second transmission interface.

The transceiver module 901 is configured to receive first feature data from a first device through the second transmission interface, where the first feature data is determined after the first device performs feature extraction on collected first media information.

The processing module 902 is configured to process the first feature data, to obtain a processing result of a first application.

In a possible implementation, the processing module 902 is configured to: send a first notification message to the first device by using the transceiver module 901 in response to a second operation on the first application, where the first device is an electronic device that establishes a communication connection with the second device, and the first notification message is used to request the first device to establish first application collaboration with the second device; and receive a first response message returned by the second device, where the first response message is used to confirm that the first device and the second device enable the first application collaboration.

In a possible implementation, the processing module 902 is configured to: receive, by using the transceiver module 901, a first notification message sent by the first device, where the first device is an electronic device that establishes a communication connection with the second device, and the first notification message is used to request the first device to establish first application collaboration with the second device; and send a first response message to the first device by using the transceiver module 901 in response to a fourth operation on the first application, where the first response message is used to confirm that the first device and the second device enable the first application collaboration.

In a possible implementation, a capability negotiation request message is sent to the first device through the second transmission interface, where the capability negotiation request message is used to request a transmission protocol supported by the first device and a feature extraction capability of the first device, the transmission protocol corresponding to the first device is used to indicate that the first device supports transmission of feature data, and the feature extraction capability of the first device is used to indicate that the first device supports extraction of the first feature data corresponding to the first media information; and a capability negotiation response message sent by the first device is received through the second transmission interface, where the capability negotiation response message is used to confirm the transmission protocol supported by the first device for transmission of the feature data.

In a possible implementation, before the first feature data from the first device is received, the following is further included.

The transceiver module 901 is configured to: receive, through the second transmission interface, a capability negotiation request message sent by the first device, where the capability negotiation request message is used to request a transmission protocol supported by the second transmission interface and a feature data processing capability of the second device, the transmission protocol corresponding to the second device is used to indicate that the second device supports transmission of feature data, and the feature data processing capability of the second device is used to indicate a capability that the second device supports processing of the first feature data to obtain the result of the first application; and send a capability negotiation response message to the first device through the second transmission interface, where the capability negotiation response message is used to confirm the transmission protocol supported by the second device for transmission of the feature data and the feature data processing capability of the second device.

In a possible implementation, the processing module 902 is configured to obtain a first feature data processing model, where the first feature data processing model is used by the second device to process the first feature data to obtain the result of the first application, a version of a first feature extraction model corresponds to a version of the first feature data processing model, and the first feature extraction model is used to perform feature extraction on the first media information.

In a possible implementation, the capability negotiation response message further includes: a version of a feature extraction model in the first device; or a version of a feature data processing model in the second device.

In a possible implementation, the transceiver module 901 is configured to receive the first feature data processing model from the first device through the second transmission interface, or receive the first feature data processing model from a server; or the processing module 902 is configured to read the first feature data processing model stored in the second device.

In a possible implementation, the transceiver module 901 is configured to send a first feature extraction model to the first device through the second transmission interface, where a version of the first feature extraction model corresponds to a version of a first feature data processing model, and the first feature data processing model is used by the second device to process the first feature data to obtain the result of the first application.

In a possible implementation, the processing module 902 is configured to: obtain a second feature data processing model, where a version of the second feature data processing model corresponds to a version of a second feature extraction model, and the second feature extraction model and the second feature data processing model are determined after the first feature extraction model and the second feature data processing model are updated.

In a possible implementation, the processing module 902 is configured to: receive first training feature data by using the transceiver module 901, where the first training feature data is determined after the first device performs feature extraction on a training sample by using the first feature extraction model; and train the first feature data processing model based on the first training feature data.

In a possible implementation, the processing module 902 is configured to: obtain feedback data corresponding to the first feature extraction model, where the feedback data is determined by the second device after training based on the first training feature data, and the feedback data is used by the first device to train the first feature extraction model; and send the feedback data to the first device by using the transceiver module 901.

In a possible implementation, the transceiver module 901 receives second feature data sent by the second device, where the second feature data is determined by the first device after the first device performs feature extraction on collected second media information by using the second feature extraction model. The processing module 902 is configured to process the second feature data by using the second feature data processing model, to obtain the result of the first application.

In a possible implementation, the transceiver module 901 is configured to send a first message to the first device through the second transmission interface, where the first message is used to indicate a status of collecting media information by the first device.

In a possible implementation, the status of collecting the media information by the first device includes at least one of the following: an enabled state, a disabled state, or collecting a parameter of the media information.

In a possible implementation, the transceiver module 901 is configured to send a second message to the first device through the second transmission interface, where the second message is used to indicate the first device to obtain first data, and the first data is one of the following: media information collected by the first device, a parameter of the first device, data stored in the first device, and data received by the first device.

In a possible implementation, the transceiver module 901 is configured to receive the first data from the first device through the second transmission interface.

In a possible implementation, the transceiver module 901 is configured to: send a second message to the first device through the second transmission interface, where the second message is used to indicate the first device to collect feature data corresponding to third media information; and receive, through the second transmission interface, third feature data sent by the first device, where the third feature data is determined after the first device performs feature extraction on the collected third media information.

In a possible implementation, the first message or the second message is determined based on the processing result of the first feature data.

In a possible implementation, the processing module 902 is configured to generate a third message in response to the processing result of the first feature data, where the third message is used to indicate content to be displayed on the first device.

In a possible implementation, there are N first devices, and the method further includes the following steps.

The transceiver module 901 is configured to receive a fourth message through the second transmission interface, where the fourth message includes M pieces of first feature data from the N first devices, N and M each are a positive integer greater than 1, and M is greater than or equal to N.

The processing module 902 is configured to process the M pieces of first feature data by using a feature data processing model corresponding to the M pieces of first feature data, to obtain the result of the first application.

In a possible implementation, the transceiver module 901 is configured to: send an authentication request message to the first device through the second transmission interface, where the authentication request message is used to request the first device to determine whether to establish a communication connection with the second device, and the communication connection is used to confirm permission that the second device controls the first device; and receive, through the second transmission interface, an authentication response message sent by the second device, where the authentication response message is used to confirm whether the first device establishes the communication connection with the second device.

In a possible implementation, the processing module 902 is configured to: set, for the first device in response to the authentication response message sent by the second device, a device identifier corresponding to the first device and an identifier of a distributed system in which the first device and the second device are located, where the device identifier corresponding to the first device and the identifier of the distributed system are used for communication between the first device and the second device; and send, by the first device, an authentication success message to the second device through a first transmission interface, where the authentication success message includes the device identifier corresponding to the first device, and the identifier of the distributed system in which the first device and the second device are located.

In a possible implementation, the second device includes a second module, and the authentication success message further includes at least one of the following: an identifier of the second module and an identifier of the second module in the distributed system.

In a possible implementation, the transceiver module 901 further includes a third transmission interface, the first device establishes a channel connection with the second device through the third transmission interface, and a message sent by the second device is sent through the third transmission interface after being encapsulated into second bit stream data through the second transmission interface.

In a possible implementation, the first device establishes the channel connection with the second device through the third transmission interface, and feature data or a message received by the second device is obtained after first bit stream data received through the third transmission interface is decapsulated through the second transmission interface.

An embodiment of this application further provides a media information transmission system, including the electronic device 800 shown in FIG. 8 or the first device shown in FIG. 3a, and further including the electronic device 900 shown in FIG. 9 or the second device shown in FIG. 3b.

An embodiment of this application further provides a computer storage medium. The computer-readable storage medium is configured to store a computer program, and when the computer program is run on a computer, the computer is enabled to perform the method in any one of the possible implementations in FIG. 2a to FIG. 7a.

An embodiment of this application further provides a computer program product including instructions. The computer program product is configured to store a computer program, and when the computer program is run on a computer, the computer is enabled to perform the method in any one of the possible implementations in FIG. 2a to FIG. 7a.

It should be understood that the processor mentioned in embodiments of this application may be a CPU, or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate, a transistor logic device, a discrete hardware component, or the like. The general-purpose processor may be a microprocessor, or the processor may be any conventional processor, or the like.

It may be understood that the memory mentioned in embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example and not limitation, RAMs in many forms may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus dynamic random access memory (direct rambus RAM, DR RAM).

It should be noted that when the processor is a general-purpose processor, a DSP, an ASIC, an FPGA or another programmable logic device, a discrete gate, a transistor logic device, or a discrete hardware component, the memory (a storage module) is integrated into the processor.

It should be noted that the memory described in this specification aims to include but is not limited to these memories and any memory of another appropriate type.

It should be understood that sequence numbers of the foregoing processes do not mean execution sequences in embodiments of this application. The execution sequences of the processes should be determined based on functions and internal logic of the processes, and should not constitute any limitation on implementation processes of embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In several embodiments provided in this application, it should be understood that the disclosed system, apparatus, and method may be implemented in another manner. For example, the described apparatus embodiment is merely an example. For example, the division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

The units described as separate parts may or may not be physically separate, and parts displayed as units may or may not be physical units, may be located in one position, or may be distributed on a plurality of network units. Some or all of the units may be selected according to actual requirements to achieve the objectives of the solutions of embodiments.

In addition, functional units in embodiments of this application may be integrated into one processing unit, each of the units may exist alone physically, or two or more units may be integrated into one unit.

When the functions are implemented in the form of a software functional unit and sold or used as an independent product, the functions may be stored in a computer-readable storage medium. Based on such an understanding, the technical solutions in this application essentially, the part contributing to the conventional technology, or a part of the technical solutions may be implemented in a form of a software product. The computer software product is stored in a storage medium, and includes several instructions for instructing a computer device (which may be a personal computer, a server, a network device, or the like) to perform some or all of the steps of the methods in embodiments of this application. The foregoing storage medium includes any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of embodiments of this application. Any variation or replacement readily figured out by a person skilled in the art within the technical scope disclosed in embodiments of this application shall fall within the protection scope of embodiments of this application. Therefore, the protection scope of embodiments of this application shall be subject to the protection scope of the claims.

## Claims

1. A media information transmission method, applied to a first device, wherein the first device comprises a first transmission interface, and the method comprises:
collecting first media information;
performing feature extraction on the first media information, to determine first feature data corresponding to the first media information; and
sending the first feature data to a second device through the first transmission interface, wherein the first feature data is used by the second device to obtain a result of a first application.

2. The method according to claim 1, wherein the method further comprises:
sending a first notification message to the second device in response to a first operation on the first application, wherein the first device is an electronic device that establishes a communication connection with the second device, and the first notification message is used to request the first device to establish first application collaboration with the second device; and
receiving a first response message returned by the second device, wherein the first response message is used to confirm that the first device and the second device enable the first application collaboration.

3. The method according to claim 1 or 2, wherein before the sending the first feature data to a second device, the method further comprises:
receiving, through the first transmission interface, a capability negotiation request message sent by the second device, wherein the capability negotiation request message is used to request a transmission protocol supported by the first device and a feature extraction capability of the first device, the transmission protocol corresponding to the first device is used to indicate that the first device supports transmission of feature data, and the feature extraction capability of the first device is used to indicate that the first device supports extraction of the first feature data corresponding to the first media information; and
sending a capability negotiation response message to the second device through the first transmission interface, wherein the capability negotiation response message is used to confirm the transmission protocol supported by the first device for transmission of the feature data and the feature extraction capability of the first device.

4. The method according to any one of claims 1 to 3, wherein before the performing feature extraction on the first media information, the method further comprises:
obtaining a first feature extraction model, wherein
the first feature extraction model is used to perform feature extraction on the first media information, a version of the first feature extraction model corresponds to a version of a first feature data processing model, and the first feature data processing model is used by the second device to process the first feature data to obtain the result of the first application.

5. The method according to claim 4, wherein the capability negotiation response message further comprises:
a version of a feature extraction model in the first device; or a version of a feature data processing model in the second device.

6. The method according to any one of claims 1 to 5, wherein the method further comprises:
receiving a first message from the second device through the first transmission interface, wherein the first message is used to indicate a status of collecting media information by the first device; and
adjusting, in response to the first message, the status of collecting the media information by the first device.

7. The method according to any one of claims 1 to 6, wherein the method further comprises:
receiving a second message from the second device through the first transmission interface, wherein the second message is used to indicate the first device to collect feature data corresponding to third media information;
collecting the third media information in response to the second message;
performing feature extraction on the third media information, to obtain third feature data; and
sending the third feature data to the second device through the first transmission interface.

8. The method according to claim 6 or 7, wherein the second message or the first message is determined by the second device based on the first feature data.

9. The method according to any one of claims 1 to 8, wherein the method further comprises:
receiving, through the first transmission interface, an authentication request message sent by the second device, wherein the authentication request message is used to request the first device to determine whether to establish a communication connection with the second device, and the communication connection is used to confirm permission that the second device controls the first device;
sending an authentication response message to the second device through the first transmission interface, wherein the authentication response message is used to confirm the permission that the second device controls the first device; and
receiving, through the first transmission interface, an authentication success message sent by the second device, wherein the authentication success message comprises a device identifier corresponding to the first device, and an identifier of a distributed system in which the first device and the second device are located.

10. The method according to any one of claims 1 to 9, wherein the first device further comprises a third transmission interface, the first device establishes a channel connection with the second device through the third transmission interface, and feature data or a message sent by the first device is sent through the third transmission interface after being encapsulated into first bit stream data through the first transmission interface.

11. The method according to any one of claims 1 to 10, wherein the first device establishes the channel connection with the second device through the third transmission interface, and a message received by the first device is obtained after second bit stream data received through the third transmission interface is decapsulated through the first transmission interface.

12. The method according to any one of claims 1 to 11, wherein the first device further comprises a display unit; and the method further comprises:
receiving a third message from the second device through the first transmission interface, wherein the third message is the result of the first application determined by the second device based on the first feature data, and the third message is used to indicate content to be displayed by the first device; and
displaying, by using the display unit in response to the third message, the content indicated by the third message and to be displayed by the first device.

13. A media information transmission method, applied to a second device, wherein the second device comprises a second transmission interface, and the method comprises:
receiving first feature data from a first device through the second transmission interface, wherein the first feature data is determined after the first device performs feature extraction on collected first media information; and
processing the first feature data, to obtain a processing result of a first application.

14. The method according to claim 13, wherein the method further comprises:
sending a first notification message to the first device in response to a second operation on the first application, wherein the first device is an electronic device that establishes a communication connection with the second device, and the first notification message is used to request the first device to establish first application collaboration with the second device; and
receiving a first response message returned by the first device, wherein the first response message is used to confirm that the first device and the second device enable the first application collaboration.

15. The method according to claim 13 or 14, wherein before the receiving first feature data from a first device, the method further comprises:
sending, through the second transmission interface, a capability negotiation request message to the first device, wherein the capability negotiation request message is used to request a transmission protocol supported by the first device and a feature extraction capability of the first device, the transmission protocol corresponding to the first device is used to indicate that the first device supports transmission of feature data, and the feature extraction capability of the first device is used to indicate that the first device supports extraction of the first feature data corresponding to the first media information; and
receiving, through the second transmission interface, a capability negotiation response message sent by the first device, wherein the capability negotiation response message is used to confirm the transmission protocol supported by the first device for transmission of the feature data.

16. The method according to any one of claims 13 to 15, wherein before the receiving first feature data, the method further comprises:
obtaining a first feature data processing model, wherein
the first feature data processing model is used by the second device to process the first feature data to obtain the result of the first application, a version of a first feature extraction model corresponds to a version of the first feature data processing model, and the first feature extraction model is used to perform feature extraction on the first media information.

17. The method according to any one of claims 13 to 16, wherein the method further comprises:
sending a first message to the first device through the second transmission interface, wherein the first message is used to indicate a status of collecting media information by the first device, and the status of collecting the media information by the first device comprises at least one of the following: an enabled state, a disabled state, or collecting a parameter of the media information.

18. The method according to any one of claims 13 to 17, wherein the method further comprises:
sending a second message to the first device through the second transmission interface, wherein the second message is used to indicate the first device to collect feature data corresponding to third media information; and
receiving, through the second transmission interface, third feature data sent by the first device, wherein the third feature data is determined after the first device performs feature extraction on the collected third media information.

19. The method according to claim 17 or 18, wherein the first message or the second message is determined based on the processing result of the first feature data.

20. The method according to any one of claims 13 to 19, wherein there are N first devices, and the method further comprises:
receiving a fourth message through the second transmission interface, wherein the fourth message comprises M pieces of first feature data from the N first devices, N and M each are a positive integer greater than 1, and M is greater than or equal to N; and
processing the M pieces of first feature data by using a feature data processing model corresponding to the M pieces of first feature data, to obtain the result of the first application.

21. The method according to any one of claims 17 to 20, wherein the method further comprises:
sending, through the second transmission interface, an authentication request message to the first device, wherein the authentication request message is used to request the first device to determine whether to establish a communication connection with the second device, and the communication connection is used to confirm permission that the second device controls the first device; and
receiving, through the second transmission interface, an authentication response message sent by the second device, wherein the authentication response message is used to confirm that the first device establishes the communication connection with the second device.

22. The method according to claim 21, wherein the method further comprises:
setting, for the first device in response to the authentication response message sent by the second device, a device identifier corresponding to the first device and an identifier of a distributed system in which the first device and the second device are located, wherein the device identifier corresponding to the first device and the identifier of the distributed system are used for communication between the first device and the second device; and
sending, by the first device, an authentication success message to the second device through the first transmission interface, wherein the authentication success message comprises the device identifier corresponding to the first device, and the identifier of the distributed system in which the first device and the second device are located.

23. The method according to any one of claims 13 to 22, wherein the second device further comprises a third transmission interface, the first device establishes a channel connection with the second device through the third transmission interface, and a message sent by the second device is sent through the third transmission interface after being encapsulated into second bit stream data through the second transmission interface.

24. The method according to any one of claims 13 to 23, wherein the first device establishes the channel connection with the second device through the third transmission interface, and feature data or a message received by the second device is obtained after first bit stream data received through the third transmission interface is decapsulated through the second transmission interface.

25. The method according to any one of claims 13 to 24, wherein the second device further comprises a display unit, and the method further comprises:
displaying the result of the first application by using the display unit.

26. An electronic device, wherein the electronic device comprises a memory and one or more processors, the memory is configured to store computer program code, the computer program code comprises computer instructions, and when the computer instructions are executed by the processor, the electronic device is enabled to perform the method according to any one of claims 1 to 12.

27. An electronic device, wherein the electronic device comprises a memory and one or more processors, the memory is configured to store computer program code, the computer program code comprises computer instructions, and when the computer instructions are executed by the processor, the electronic device is enabled to perform the method according to any one of claims 13 to 25.

28. A media information transmission system, comprising the electronic device according to claim 26 and the electronic device according to claim 27.

29. A computer-readable storage medium, wherein the computer-readable storage medium comprises program instructions, and when the program instructions are run on an electronic device, the electronic device is enabled to perform the method according to any one of claims 1 to 12, or the electronic device is enabled to perform the method according to any one of claims 13 to 25.
